(19) Europäisches Patentamt
European Patent Office
Office européen des brevets

(11) EP 2 723 927 B1

(12) **EUROPEAN PATENT SPECIFICATION**

(45) Date of publication and mention of the grant of the patent:
**23.11.2016 Bulletin 2016/47**

(21) Application number: **12731774.1**

(22) Date of filing: **01.06.2012**

(51) Int Cl.:
***D04H 1/00*** *(2006.01)* ***D04H 3/00*** *(2012.01)*
***C08F 2/06*** *(2006.01)* ***D01F 6/46*** *(2006.01)*

(86) International application number:
**PCT/US2012/040472**

(87) International publication number:
**WO 2012/177376 (27.12.2012 Gazette 2012/52)**

(54) **ELASTIC NONWOVEN MATERIALS COMPRISING PROPYLENE-BASED AND ETHYLENE-BASED POLYMERS**

ELASTISCHEN VLIES DIE AUS PROPYLEN-BASIS-POLYMERE UND ETHYLEN-BASIERTE POLYMERE BESTEHEN

NON TISSÉS ÉLASTIQUES COMPRENANT DES POLYMÈRES À BASE DE PROPYLÈNE ET DES POLMÈRES À BASE D' ÉTHYLÈNE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **21.06.2011 US 201161499369 P**

(43) Date of publication of application:
**30.04.2014 Bulletin 2014/18**

(73) Proprietor: **ExxonMobil Chemical Patents Inc.**
**Baytown TX 77520-2101 (US)**

(72) Inventors:
- **MEHTA, Aspy, K.**
  **Humble, TX 77346 (US)**
- **HARRIS, Charles, R.**
  **Corsby, TX 77532 (US)**
- **KEYS, Gregory, E.**
  **Houston, TX 77073 (US)**
- **ZHAO, Bin**
  **Shanghai 200103 (CN)**
- **RICHESON, Galen, C.**
  **Humble, TX 77346 (US)**

(74) Representative: **Mareschal, Anne et al**
**ExxonMobil Chemical Europe Inc.**
**IP Law Europe**
**Hermeslaan 2**
**1831 Machelen (BE)**

(56) References cited:
**WO-A1-01/73174** **WO-A1-02/34795**
**US-A1- 2002 004 575** **US-A1- 2002 019 490**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 723 927 B1

## Description

### BACKGROUND OF THE INVENTION

Propylene-based polymers and copolymers are well known in the art for their usefulness in the manufacture of nonwoven fibers and fabrics. Such fibers and fabrics have a wide variety of uses, particularly in applications such as medical and hygiene products, clothing, filter media, and sorbent products, among others. In the hygiene and other markets, elastic fabrics with excellent aesthetics and low cost are widely required. Such fabrics have previously been prepared using propylene-based elastomers, either alone or in combination with homopolypropylene.

Multilayer fabrics and laminates are also known, and may commonly comprise a propylene-based elastomeric core layer with one or more facing layers comprising polypropylene, polyethylene terephthalate, blends thereof, and the like. While such multilayer fabrics have good elastic properties and aesthetics, there is a need in certain applications for increased strength without increasing the basis weight of the facing and/or core layers. Heavier basis weight fabrics may be undesirable because of the added cost and unwanted extra bulk or weight in the resulting finished consumer article.

Further, it can be difficult to process neat propylene-based elastomers on conventional fiber spinning and nonwoven equipment because the elastomers typically have low crystallinity and cannot solidify quickly enough to form useful fibers or fabrics at commercially desirable output rates without blocking. Blocking, described as difficulty in separating two adjacent sheets or fibers of nonwoven material, may occur when fibers and fabrics made from neat propylene-based elastomers are wound onto bobbins or fabric rolls. In the past, blocking issues were alleviated by the addition of minor amounts (generally less than 30 wt%) of a crystallizable blend partner. The crystallizable blend partner in commercial practice is often polypropylene. There is still, however, a desire to obtain improved elasticity in propylene-based elastomeric fibers and nonwovens while maintaining the robust fabrication processability provided by the addition of a crystallizable blend partner.

It would be beneficial to produce elastic fibers and nonwoven fabrics having desirable aesthetic and elastic properties while reducing cost and processing issues encountered in the past and maintaining a comparatively low basis weight. The present invention achieves these objectives by blending a minor amount of an ethylene-based polymer with a propylene-based polymer or polymers to form a polymer blend from which elastomeric fibers and fabrics may be formed. The resulting blends can be processed on conventional fiber spinning and nonwoven equipment, without additional facing layers, while reducing the blocking effect. The layers further demonstrate improved tensile properties and comparable or improved elastic properties when compared to propylene-based polymers alone and propylene-based polymers blended with a comparable amount of polypropylene in place of the ethylene-based polymer.

### SUMMARY OF THE INVENTION

The present invention relates to elastic nonwoven materials comprising an elastic layer formed from a polymer blend comprising a propylene-based polymer and a minor amount of an ethylene-based polymer. The propylene-based polymer comprises from about 75 to about 95 wt% propylene and from about 5 to about 25 wt% ethylene and/or a $C_4$-$C_{12}$ $\alpha$-olefin, and has a triad tacticity greater than about 90% and a heat of fusion less than about 75 J/g. The ethylene-based polymer comprises from about 65 to about 100 wt% ethylene and from 0 to about 35 wt% of one or more $C_3$-$C_{12}$ $\alpha$-olefins. The present invention also provides processes for producing nonwoven materials having an elastic layer comprising a propylene-based polymer and a minor amount of an ethylene-based polymer. The resulting nonwoven materials exhibit improved tensile strength and equal or enhanced elasticity when compared with nonwoven materials having either an elastic layer comprising a blend of the propylene-based polymer and an equal amount of polypropylene in place of the ethylene-based polymer or an elastic layer comprising the propylene-based polymer alone. The invention also relates to methods of making such elastic nonwoven materials.

The nonwoven materials described herein are highly processable and may be formed in spunbond or meltblown processes. The nonwovens may be used in a variety of applications, such as medical and hygiene products, clothing, filter media, and sorbent products, among others. In some embodiments of the invention, the nonwoven materials may further comprise one or more facing layers on one or both sides of the elastic layer.

### BRIEF DESCRIPTION OF THE DRAWINGS

Figures 1a and 1b are 1st and 2nd cycle hysteresis curves plotting engineering strain versus load for inventive and comparative fibers.

Figures 2a, 2b, and 2c are 1st and 2nd cycle hysteresis curves plotting average strain versus average load for fibers comprising 85 wt% propylene-based polymer and 15 wt% of one or more crystallizable blend partners stretched at 20 in/min.

Figures 3a, 3b, and 3c show a more detailed view of a portion of the hysteresis curves of Figures 2a, 2b, and 2c.

Figures 4a, 4b, and 4c also show detailed views of a portion of the hysteresis curves of Figures 2a, 2b, and 2c.

Figure 5a shows peak cross direction tensile strength and elongation for laminates made with elastic layers comprising blends of a propylene-based polymer and an ethylene-based polymer according to the invention, as well as a comparative laminate made with an elastic layer comprising a propylene-based elastomer alone.

Figure 5b shows cross direction tensile strength at 100% elongation for laminates made with elastic layers comprising blends of a propylene-based polymer and an ethylene-based polymer according to the invention, as well as a comparative laminate made with an elastic layer comprising a propylene-based elastomer alone.

Figure 6 shows $1^{st}$ and $2^{nd}$ cycle hysteresis and permanent set for laminates made with elastic layers comprising propylene blends of the invention, as well as a comparative laminate made with an elastic layer comprising a propylene-based elastomer alone.

## DETAILED DESCRIPTION OF THE INVENTION

The present invention is directed to nonwoven materials having at least one elastic layer, wherein the elastic layer comprises a propylene-based polymer and an ethylene-based polymer, and to processes for forming such materials. In certain embodiments, the elastic layer comprises from about 70 to about 99 wt% of a propylene-based polymer and from about 1 to about 30 wt% of one or more ethylene-based polymers. The propylene-based polymer comprises propylene and from about 5 to about 25 wt% units derived from ethylene and/or a $C_4$-$C_{12}$ $\alpha$-olefin. The propylene-based polymer also has a heat of fusion (Hf) less than about 75 J/g, and a triad tacticity greater than about 90%. Each ethylene-based polymer comprises from about 65 to about 100 wt% ethylene and from about 0 to about 35 wt% of one or more $C_3$-$C_{12}$ $\alpha$-olefins.

The present invention is also directed to processes for forming nonwoven compositions such as those described above. In certain embodiments, the processes comprise forming a polymer blend comprising a propylene-based polymer and one or more ethylene-based polymers, forming fibers comprising the polymer blend, and forming an elastic nonwoven layer from the fibers. In such processes, the propylene-based polymer comprises from about 75 to about 95 wt% propylene and from about 5 to about 25 wt% ethylene and/or a $C_4$-$C_{12}$ $\alpha$-olefin, and has a triad tacticity greater than about 90% and a heat of fusion less than about 75 J/g. Each ethylene-based polymer comprises from about 65 to 100 wt% ethylene and from 0 to about 35 wt% of one or more $C_3$-$C_{12}$ $\alpha$-olefins.

As used herein, the term "copolymer" is meant to include polymers having two or more monomers, optionally with other monomers, and may refer to interpolymers, terpolymers, etc. The term "polymer" as used herein includes, but is not limited to, homopolymers, copolymers, terpolymers, etc. and alloys and blends thereof. The term "polymer" as used herein also includes impact, block, graft, random and alternating copolymers. The term "polymer" shall further include all possible geometrical configurations unless otherwise specifically stated. Such configurations may include isotactic, syndiotactic and random symmetries. The term "blend" as used herein refers to a mixture of two or more polymers.

The term "monomer" or "comonomer" as used herein can refer to the monomer used to form the polymer, i.e., the unreacted chemical compound in the form prior to polymerization, and can also refer to the monomer after it has been incorporated into the polymer, also referred to herein as a "[monomer]-derived unit", which by virtue of the polymerization reaction typically has fewer hydrogen atoms than it does prior to the polymerization reaction. Different monomers are discussed herein, including for example propylene monomers, ethylene monomers, and diene monomers.

"Polypropylene" as used herein includes homopolymers and copolymers of propylene or mixtures thereof. Products that include one or more propylene monomers polymerized with one or more additional monomers may be more commonly known as random copolymers (RCP) or impact copolymers (ICP). Impact copolymers are also known in the art as heterophasic copolymers. "Propylene-based," as used herein, is meant to include any polymer comprising propylene, either alone or in combination with one or more comonomers, in which propylene is the major component (i.e. greater than 50 wt% propylene).

"Polyethylene" as used herein includes homopolymers and copolymers of ethylene or mixtures thereof. "Ethylene-based," as used herein, is meant to include any polymer comprising ethylene, either alone or in combination with one or more copolymers, in which ethylene is the major component (i.e. greater than 50 wt% ethylene).

### Propylene-Based Polymers

In certain embodiments of the present invention, the elastic layer of the nonwoven materials described herein comprises one or more propylene-based polymers, which comprise propylene and from about 5 to about 25 wt% of one or more comonomers selected from ethylene and/or $C_4$-$C_{12}$ $\alpha$-olefins. In one or more embodiments, the $\alpha$-olefin comonomer units may derive from ethylene, butene, pentene, hexene, 4-methyl-1-pentene, octene, or decene. The embodiments described below are discussed with reference to ethylene as the α-olefin comonomer, but the embodiments are equally applicable to other copolymers with other α-olefin comonomers. In this regard, the copolymers may simply be referred to as propylene-based polymers with reference to ethylene as the α-olefin.

In one or more embodiments, the propylene-based polymer may include at least about 5 wt%, at least about 6 wt%, at least about 7 wt%, or at least about 8 wt%, or at least about 10 wt%, or at least about 12 wt% ethylene-derived units. In those or other embodiments, the copolymers may include up to about 30 wt%, or up to about 25 wt%, or up to about 22 wt%, or up to about 20 wt%, or up to about 19 wt%, or up to about 18 wt%, or up to about 17 wt% ethylene-derived units, where the percentage by weight is based upon the total weight of the propylene-derived and α-olefin derived units. Stated another way, the propylene-based polymer may include at least about 70 wt%, or at least about 75 wt%, or at least about 80 wt%, or at least about 81 wt% propylene-derived units, or at least about 82 wt% propylene-derived units, or at least about 83 wt% propylene-derived units; and in these or other embodiments, the copolymers may include up to about 95 wt%, or up to about 94 wt%, or up to about 93 wt%, or up to about 92 wt%, or up to about 90 wt%, or up to about 88 wt% propylene-derived units, where the percentage by weight is based upon the total weight of the propylene-derived and α-olefin derived units. In certain embodiments, the propylene-based polymer may comprise from about 8 to about 20 wt% ethylene-derived units, or from about 12 to about 18 wt% ethylene-derived units.

The propylene-based polymers of one or more embodiments are characterized by a melting point (Tm), which can be determined by differential scanning calorimetry (DSC). For purposes herein, the maximum of the highest temperature peak is considered to be the melting point of the polymer. A "peak" in this context is defined as a change in the general slope of the DSC curve (heat flow versus temperature) from positive to negative, forming a maximum without a shift in the baseline where the DSC curve is plotted so that an endothermic reaction would be shown with a positive peak.

In one or more embodiments, the Tm of the propylene-based polymer (as determined by DSC) is less than about 115°C, or less than about 110°C, or less than about 100°C, or less than about 95°C, or less than about 90°C.

In one or more embodiments, the propylene-based polymer may be characterized by its heat of fusion (Hf), as determined by DSC. In one or more embodiments, the propylene-based polymer may have an Hf that is at least about 0.5 J/g, or at least about 1.0 J/g, or at least about 1.5 J/g, or at least about 3.0 J/g, or at least about 4.0 J/g, or at least about 5.0 J/g, or at least about 6.0 J/g, or at least about 7.0 J/g. In these or other embodiments, the propylene-based copolymer may be characterized by an Hf of less than about 75 J/g, or less than about 70 J/g, or less than about 60 J/g, or less than about 50 J/g, or less than about 45 J/g, or less than about 40 J/g, or less than about 35 J/g, or less than about 30 J/g.

As used within this specification, DSC procedures for determining Tm and Hf include the following. The polymer is pressed at a temperature of from about 200°C to about 230°C in a heated press, and the resulting polymer sheet is hung, under ambient conditions, in the air to cool. About 6 to 10 mg of the polymer sheet is removed with a punch die. This 6 to 10 mg sample is annealed at room temperature for about 80 to 100 hours. At the end of this period, the sample is placed in a DSC (Perkin Elmer Pyris One Thermal Analysis System) and cooled to about -50°C to about -70°C. The sample is heated at 10°C/min to attain a final temperature of about 200°C. The sample is kept at 200°C for 5 minutes and a second cool-heat cycle is performed. Events from both cycles are recorded. The thermal output is recorded as the area under the melting peak of the sample, which typically occurs between about 0°C and about 200°C. It is measured in Joules and is a measure of the Hf of the polymer.

The propylene-based polymer can have a triad tacticity of three propylene units, as measured by $^{13}C$ NMR, of 75% or greater, 80% or greater, 85% or greater, 90% or greater, 92% or greater, 95% or greater, or 97% or greater. In one or more embodiments, the triad tacticity may range from about 75 to about 99%, or from about 80 to about 99%, or from about 85 to about 99%, or from about 90 to about 99%, or from about 90 to about 97%, or from about 80 to about 97%. Triad tacticity is determined by the methods described in U.S. Patent No. 7,232,871.

The propylene-based polymer may have a tacticity index m/r ranging from a lower limit of 4 or 6 to an upper limit of 8 or 10 or 12. The tacticity index, expressed herein as "m/r", is determined by $^{13}C$ nuclear magnetic resonance ("NMR"). The tacticity index m/r is calculated as defined by H. N. Cheng in 17 MACROMOLECULES 1950 (1984), incorporated herein by reference. The designation "m" or "r" describes the stereochemistry of pairs of contiguous propylene groups, "m" referring to meso and "r" to racemic. An m/r ratio of 1.0 generally describes a syndiotactic polymer, and an m/r ratio of 2.0 an atactic material. An isotactic material theoretically may have a ratio approaching infinity, and many by-product atactic polymers have sufficient isotactic content to result in ratios of greater than 50.

In one or more embodiments, the propylene-based polymer may have a % crystallinity of from about 0.5% to about 40%, or from about 1% to about 30%, or from about 5% to about 25%, determined according to DSC procedures. Crystallinity may be determined by dividing the Hf of a sample by the Hf of a 100% crystalline polymer, which is assumed to be 189 joules/gram for isotactic polypropylene or 350 joules/gram for polyethylene.

In one or more embodiments, the propylene-based polymer may have a density of from about 0.85 g/cm$^3$ to about 0.92 g/cm$^3$, or from about 0.86 g/cm$^3$ to about 0.90 g/cm$^3$, or from about 0.86 g/cm$^3$ to about 0.89 g/cm$^3$ at room temperature as measured per the ASTM D-792 test method.

In one or more embodiments, the propylene-based polymer can have a melt index (MI) (ASTM D-1238, 2.16 kg @ 190°C), of less than or equal to about 100 g/10 min, or less than or equal to about 50 g/10 min, or less than or equal to about 25 g/10 min, or less than or equal to about 10 g/10 min, or less than or equal to about 9.0 g/10 min, or less than or equal to about 8.0 g/10 min, or less than or equal to about 7.0 g/10 min.

In one or more embodiments, the propylene-based polymer may have a melt flow rate (MFR), as measured according to ASTM D-1238, 2.16 kg weight @ 230°C, greater than about 1 g/10 min, or greater than about 2 g/10 min, or greater than about 5 g/10 min, or greater than about 8 g/10 min, or greater than about 10 g/10 min. In the same or other embodiments, the propylene-based polymer may have an MFR less than about 500 g/10 min, or less than about 400 g/10 min, or less than about 300 g/10 min, or less than about 200 g/10 min, or less than about 100 g/10 min, or less than about 75 g/10 min, or less than about 50 g/10 min. In certain embodiments, the propylene-based polymer may have an MFR from about 1 to about 100 g/10 min, or from about 2 to about 75 g/10 min, or from about 5 to about 50 g/10 min.

In one or more embodiments, the propylene-based polymer may be a polymer that has a low MFR (for example, lower than 25 g/10 min) which is visbroken after exiting the reactor to increase the MFR prior to being blended with the ethylene-based polymer. "Visbreaking" as used herein is a process for reducing the molecular weight of a polymer by subjecting the polymer to chain scission. The visbreaking process increases the MFR of a polymer and typically narrows its molecular weight distribution. Several different types of chemical reactions can be employed for visbreaking propylene-based polymers. An example is thermal pyrolysis, which is accomplished by exposing a polymer to high temperatures, e.g., in an extruder at 350°C or higher. Other approaches are exposure to powerful oxidizing agents and exposure to ionizing radiation. The most commonly used method of visbreaking in commercial practice is the addition of a prodegradant to the polymer. A prodegradant is a substance that promotes chain scission when mixed with a polymer, which is then heated under extrusion conditions. Examples of prodegradants used in commercial practice are alkyl hydroperoxides and dialkyl peroxides. These materials, at elevated temperatures, initiate a free radical chain reaction resulting in scission of polypropylene molecules. The terms "prodegradant" and "visbreaking agent" are used interchangeably herein. Polymers that have undergone chain scission via a visbreaking process are said herein to be "visbroken." Such visbroken polymer grades, particularly polypropylene grades, are often referred to in the industry as "controlled rheology" or "CR" grades.

In one or more embodiments, the propylene-based polymer may be treated with a visbreaking agent such that the melt flow rate of the polymer after treatment is at least 1.25 times the initial MFR of the polymer prior to visbreaking. Alternately, the propylene-based polymer may be treated with a visbreaking agent such that the MFR is increased by 1.5 times, or 2 times, or 2.5 times, or 3 times, or 3.5 times, or 4 times the MFR of the polymer prior to visbreaking. Accordingly, the visbroken propylene-based polymers used in the blends with ethylene-based polymers as described herein may have an MFR greater than about 25 g/10 min, or greater than about 30 g/10 min, or greater than about 35 g/10 min, or greater than about 40 g/10 min, or greater than about 45 g/10 min.

In one or more embodiments, the propylene-based polymer may have a Mooney viscosity [ML (1+4) @ 125°C], as determined according to ASTM D-1646, of less than about 100, or less than about 75, or less than about 50, or less than about 30.

In one or more embodiments, the propylene-based polymer may have a g' index value of 0.95 or greater, or at least 0.97, or at least 0.99, wherein g' is measured at the Mw of the polymer using the intrinsic viscosity of isotactic polypropylene as the baseline. For use herein, the g' index is defined as:

$$g' = \frac{\eta_b}{\eta_l}$$

where $\eta_b$ is the intrinsic viscosity of the polymer and $\eta_1$ is the intrinsic viscosity of a linear polymer of the same viscosity-averaged molecular weight ($M_v$) as the polymer. $\eta_1 = KM_v^{\alpha}$, K and $\alpha$ are measured values for linear polymers and should be obtained on the same instrument as the one used for the g' index measurement.

In one or more embodiments, the propylene-based polymer may have a weight average molecular weight (Mw) of from about 50,000 to about 5,000,000 g/mol, or from about 75,000 to about 1,000,000 g/mol, or from about 100,000 to about 500,000 g/mol, or from about 125,000 to about 300,000 g/mol.

In one or more embodiments, the propylene-based polymer may have a number average molecular weight (Mn) of from about 2,500 to about 2,500,000 g/mol, or from about 5,000 to about 500,000 g/mol, or from about 10,000 to about 250,000 g/mol, or from about 25,000 to about 200,000 g/mol.

In one or more embodiments, the propylene-based polymer may have a Z-average molecular weight (Mz) of from about 10,000 to about 7,000,000 g/mol, or from about 50,000 to about 1,000,000 g/mol, or from about 80,000 to about 700,000 g/mol, or from about 100,000 to about 500,000 g/mol.

In one or more embodiments, the molecular weight distribution (MWD, equal to Mw/Mn) of the propylene-based polymer may be from about 1 to about 40, or from about 1 to about 15, or from about 1.8 to about 5, or from about 1.8 to about 3.

Techniques for determining the molecular weight (Mn, Mw and Mz) and MWD may be found in U.S. Patent No. 4,540,753 (Cozewith, Ju and Verstrate) (which is incorporated by reference herein for purposes of U.S. practices) and references cited therein and in Macromolecules, 1988, Vol. 21, p. 3360 (Verstrate et al.), which is herein incorporated by reference for purposes of U.S. practices, and references cited therein. For example, molecular weight may be determined by size exclusion chromatography (SEC) by using a Waters 150 gel permeation chromatograph equipped with the differential refractive index detector and calibrated using polystyrene standards.

Optionally, the propylene-based polymer may also include one or more dienes. The term "diene" is defined as a hydrocarbon compound that has two unsaturation sites, i.e., a compound having two double bonds connecting carbon atoms. Depending on the context, the term "diene" in this patent refers broadly to either a diene monomer prior to polymerization, e.g., forming part of the polymerization medium, or a diene monomer after polymerization has begun (also referred to as a diene monomer unit or a diene-derived unit). Exemplary dienes suitable for use in the present invention include, but are not limited to, butadiene, pentadiene, hexadiene (e.g., 1,4-hexadiene), heptadiene (e.g., 1,6-heptadiene), octadiene (e.g., 1,7-octadiene), nonadiene (e.g., 1,8-nonadiene), decadiene (e.g., 1,9-decadiene), undecadiene (e.g., 1,10-undecadiene), dodecadiene (e.g., 1,11-dodecadiene), tridecadiene (e.g., 1,12-tridecadiene), tetradecadiene (e.g., 1,13-tetradecadiene), pentadecadiene, hexadecadiene, heptadecadiene, octadecadiene, nonadecadiene, icosadiene, heneicosadiene, docosadiene, tricosadiene, tetracosadiene, pentacosadiene, hexacosadiene, heptacosadiene, octacosadiene, nonacosadiene, triacontadiene, and polybutadienes having a molecular weight (Mw) of less than 1,000 g/mol. Examples of straight chain acyclic dienes include, but are not limited to 1,4-hexadiene and 1,6-octadiene. Examples of branched chain acyclic dienes include, but are not limited to 5-methyl-1,4-hexadiene, 3,7-dimethyl-1,6-octadiene, and 3,7-dimethyl-1,7-octadiene. Examples of single ring alicyclic dienes include, but are not limited to 1,4-cyclohexadiene, 1,5-cyclooctadiene, and 1,7-cyclododecadiene. Examples of multi-ring alicyclic fused and bridged ring dienes include, but are not limited to tetrahydroindene; norbornadiene; methyltetrahydroindene; dicyclopentadiene; bicyclo(2.2.1)hepta-2,5-diene; and alkenyl-, alkylidene-, cycloalkenyl-, and cylcoalkylidene norbornenes [including, e.g., 5-methylene-2-norbornene, 5-ethylidene-2-norbornene, 5-propenyl-2-norbornene, 5-isopropylidene-2-norbornene, 5-(4-cyclopentenyl)-2-norbornene, 5-cyclohexylidene-2-norbornene, and 5-vinyl-2-norbornene]. Examples of cycloalkenyl-substituted alkenes include, but are not limited to vinyl cyclohexene, allyl cyclohexene, vinylcyclooctene, 4-vinylcyclohexene, allyl cyclodecene, vinylcyclododecene, and tetracyclododecadiene. In some embodiments of the present invention, the diene is selected from 5-ethylidene-2-norbornene (ENB); 1,4-hexadiene; 5-methylene-2-norbornene (MNB); 1,6-octadiene; 5-methyl-1,4-hexadiene; 3,7-dimethyl-1,6-octadiene; 1,3-cyclopentadiene; 1,4-cyclohexadiene; vinyl norbornene (VNB); dicyclopentadiene (DCPD), and combinations thereof. In one or more embodiments, the diene is ENB.

In some embodiments, the propylene-based polymer may optionally comprise from 0.05 to about 6 wt% diene-derived units. In further embodiments, the polymer comprises from about 0.1 to about 5.0 wt% diene-derived units, or from about 0.25 to about 3.0 wt% diene-derived units, or from about 0.5 to about 1.5 wt% diene-derived units.

In one or more embodiments, the propylene-based polymer can optionally be grafted (i.e. "functionalized") using one or more grafting monomers. As used herein, the term "grafting" denotes covalent bonding of the grafting monomer to a polymer chain of the propylene-based polymer.

The grafting monomer can be or include at least one ethylenically unsaturated carboxylic acid or acid derivative, such as an acid anhydride, ester, salt, amide, imide, acrylates or the like. Illustrative monomers include but are not limited to acrylic acid, methacrylic acid, maleic acid, fumaric acid, itaconic acid, citraconic acid, mesaconic acid, maleic anhydride, 4-methyl cyclohexene-1,2- dicarboxylic acid anhydride, bicyclo(2.2.2)octene-2,3-dicarboxylic acid anhydride, 1,2,3,4,5,8,9,10-octahydronaphthalene-2,3-dicarboxylic acid anhydride, 2-oxa-1,3-diketospiro(4.4)nonene, bicyclo(2.2.1)heptene-2,3-dicarboxylic acid anhydride, maleopimaric acid, tetrahydrophthalic anhydride, norbornene-2,3-dicarboxylic acid anhydride, nadic anhydride, methyl nadic anhydride, himic anhydride, methyl himic anhydride, and 5-methylbicyclo(2.2.1)heptene-2,3- dicarboxylic acid anhydride. Other suitable grafting monomers include methyl acrylate and higher alkyl acrylates, methyl methacrylate and higher alkyl methacrylates, acrylic acid, methacrylic acid, hydroxymethyl methacrylate, hydroxyl-ethyl methacrylate and higher hydroxy- alkyl methacrylates and glycidyl methacrylate. Maleic anhydride is a preferred grafting monomer.

In one or more embodiments, the grafted propylene-based polymer comprises from about 0.5 to about 10 wt% ethylenically unsaturated carboxylic acid or acid derivative, more preferably from about 0.5 to about 6 wt%, more preferably from about 0.5 to about 3 wt%; in other embodiments from about 1 to about 6 wt%, more preferably from about 1 to about 3 wt%. In a preferred embodiment wherein the graft monomer is maleic anhydride, the maleic anhydride concentration in the grafted polymer is preferably in the range of about 1 to about 6 wt. %, preferably at least about 0.5 wt. % and highly preferably about 1.5 wt. %.

Preparation of Propylene-Based Polymers

Polymerization of the propylene-based polymer may be conducted by reacting monomers in the presence of a catalyst system described herein at a temperature of from 0°C to 200°C for a time of from 1 second to 10 hours. Preferably homogeneous conditions are used, such as a continuous solution process or a bulk polymerization process with excess monomer used as diluent. The continuous process may use some form of agitation to reduce concentration differences in the reactor and maintain steady state polymerization conditions. The heat of the polymerization reaction is preferably removed by cooling of the polymerization feed and allowing the polymerization to heat up to the polymerization, although internal cooling systems may be used.

Further description of exemplary methods suitable for preparation of the propylene-based polymers described herein may be found in U.S. Patent No. 6,881,800, which is incorporated by reference herein for purposes of U.S. practice.

The triad tacticity and tacticity index of the propylene-based copolymer may be controlled by the catalyst, which influences the stereoregularity of propylene placement, the polymerization temperature, according to which stereoregularity can be reduced by increasing the temperature, and by the type and amount of a comonomer, which tends to reduce the level of longer propylene derived sequences.

Too much comonomer will reduce the crystallinity provided by the crystallization of stereoregular propylene derived sequences to the point where the material lacks strength; too little and the material will be too crystalline. The comonomer content and sequence distribution of the polymers can be measured using $^{13}C$ nuclear magnetic resonance (NMR) by methods well known to those skilled in the art. Comonomer content of discrete molecular weight ranges can be measured using methods well known to those skilled in the art, including Fourier Transform Infrared Spectroscopy (FTIR) in conjunction with samples by GPC, as described in Wheeler and Willis, Applied Spectroscopy, 1993, Vol. 47, pp. 1128-1130. For a propylene ethylene copolymer containing greater than 75 wt% propylene, the comonomer content (ethylene content) of such a polymer can be measured as follows: A thin homogeneous film is pressed at a temperature of about 150°C or greater, and mounted on a Perkin Elmer PE 1760 infrared spectrophotometer. A full spectrum of the sample from 600 cm-1 to 4000 cm-1 is recorded and the monomer weight percent of ethylene can be calculated according to the following equation: Ethylene wt% = 82.585 - 111.987X + 30.045X2, where X is the ratio of the peak height at 1155 cm-1 and peak height at either 722 cm-1 or 732 cm-1, whichever is higher. For propylene ethylene copolymers having 75 wt% or less propylene content, the comonomer (ethylene) content can be measured using the procedure described in Wheeler and Willis.

Reference is made to U.S. Patent No. 6,525,157, whose test methods are also fully applicable for the various measurements referred to in this specification and claims and which contains more details on GPC measurements, the determination of ethylene content by NMR and the DSC measurements.

The catalyst may also control the stereoregularity in combination with the comonomer and the polymerization temperature. The propylene-based polymers described herein are prepared using one or more catalyst systems. As used herein, a "catalyst system" comprises at least a transition metal compound, also referred to as catalyst precursor, and an activator. Contacting the transition metal compound (catalyst precursor) and the activator in solution upstream of the polymerization reactor or in the polymerization reactor of the disclosed processes yields the catalytically active component (catalyst) of the catalyst system. Any given transition metal compound or catalyst precursor can yield a catalytically active component (catalyst) with various activators, affording a wide array of catalysts deployable in the processes of the present invention. Catalyst systems of the present invention comprise at least one transition metal compound and at least one activator. However, catalyst systems of the current disclosure may also comprise more than one transition metal compound in combination with one or more activators. Such catalyst systems may optionally include impurity scavengers. Each of these components is described in further detail below.

In one or more embodiments of the present invention, the catalyst systems used for producing propylene-based polymers comprise a metallocene compound. In some embodiments, the metallocene compound is a bridged bisindenyl metallocene having the general formula $(In^1)Y(In^2)MX_2$, where $In^1$ and $In^2$ are identical substituted or unsubstituted indenyl groups bound to M and bridged by Y, Y is a bridging group in which the number of atoms in the direct chain connecting $In^1$ with $In^2$ is from 1 to 8 and the direct chain comprises C or Si, and M is a Group 3, 4, 5, or 6 transition metal. $In^1$ and $In^2$ may be substituted or unsubstituted. If $In_1$ and $In_2$ are substituted by one or more substituents, the substituents are selected from the group consisting of a halogen atom, $C_1$ to $C_{10}$ alkyl, $C_5$ to $C_{15}$ aryl, $C_6$ to $C_{25}$ alkylaryl, and N- or P- containing alkyl or aryl. Exemplary metallocene compounds of this type include, but are not limited to, μ-dimethylsilylbis(indenyl)hafniumdimethyl and μ-dimethylsilylbis(indenyl)zirconiumdimethyl.

In other embodiments, the metallocene compound may be a bridged bisindenyl metallocene having the general formula $(In^1)Y(In^2)MX_2$, where $In^1$ and $In^2$ are identical 2,4-substituted indenyl groups bound to M and bridged by Y, Y is a bridging group in which the number of atoms in the direct chain connecting $In^1$ with $In^2$ is from 1 to 8 and the direct chain comprises C or Si, and M is a Group 3, 4, 5, or 6 transition metal. $In^1$ and $In^2$ are substituted in the 2 position by a methyl group and in the 4 position by a substituent selected from the group consisting of $C_5$ to $C_{15}$ aryl, $C_6$ to $C_{25}$ alkylaryl, and N- or P- containing alkyl or aryl. Exemplary metallocene compounds of this type include, but are not limited

to, (μ-dimethylsilyl)bis(2-methyl-4-(3,'5'-di-tert-butylphenyl)indenyl)zirconiumdimethyl, (μ-dimethylsilyl)bis(2-methyl-4-(3,'5'-di-tert-butylphenyl)indenyl)hafniumdimethyl, (μ-dimethylsilyl)bis(2-methyl-4-naphthylindenyl)zirconiumdimethyl, (μ-dimethylsilyl)bis(2-methyl-4-naphthylindenyl)hafniumdimethyl, (μ-dimethylsilyl)bis(2-methyl-4-(N-carbazyl)indenyl)zirconiumdimethyl, and (μ-dimethylsilyl)bis(2-methyl-4-(N-carbazyl)indenyl)hafniumdimethyl.

Alternatively, in one or more embodiments of the present invention, the metallocene compound may correspond to one or more of the formulas disclosed in U.S. Patent No. 7,601,666. Such metallocene compounds include, but are not limited to, dimethylsilyl bis(2-(methyl)-5,5,8,8-tetramethyl-5,6,7,8-tetrahydrobenz(f)indenyl)hafnium dimethyl, diphenylsilyl bis(2-(methyl)-5,5,8,8-tetramethyl-5,6,7,8-tetrahydrobenz(f)indenyl)hafnium dimethyl, diphenylsilyl bis(5,5,8,8-tetramethyl-5,6,7,8-tetrahydrobenz(f)indenyl)hafnium dimethyl, diphenylsilyl bis(2-(methyl)-5,5,8,8-tetramethyl-5,6,7,8-tetrahydrobenz(f) indenyl)zirconium dichloride, and cyclo-propylsilyl bis(2-(methyl)-5,5,8,8-tetramethyl-5,6,7,8-tetrahydrobenz(f) indenyl)hafnium dimethyl.

In one or more embodiments of the present invention, the activators of the catalyst systems used to produce propylene-based polymers comprise a cationic component. In some embodiments, the cationic component has the formula $[R^1R^2R^3AH]^+$, where A is nitrogen, $R^1$ and $R^2$ are together a $-(CH_2)_a-$ group, where a is 3, 4, 5 or 6 and form, together with the nitrogen atom, a 4-, 5-, 6- or 7-membered non-aromatic ring to which, via adjacent ring carbon atoms, optionally one or more aromatic or heteroaromatic rings may be fused, and $R^3$ is $C_1$, $C_2$, $C_3$, $C_4$ or $C_5$ alkyl, or N-methylpyrrolidinium or N-methylpiperidinium. In other embodiments, the cationic component has the formula $[R_nAH]^+$, where A is nitrogen, n is 2 or 3, and all R are identical and are $C_1$ to $C_3$ alkyl groups, such as for example trimethylammonium, trimethylanilinium, triethylammonium, dimethylanilinium, or dimethylammonium.

In one or more embodiments of the present invention, the activators of the catalyst systems used to produce the propylene-based polymers comprise an anionic component, $[Y]^-$. In some embodiments, the anionic component is a non-coordinating anion (NCA), having the formula $[B(R^4)_4]^-$, where $R^4$ is an aryl group or a substituted aryl group, of which the one or more substituents are identical or different and are selected from the group consisting of alkyl, aryl, a halogen atom, halogenated aryl, and haloalkylaryl groups. In one or more embodiments, the substituents are perhalogenated aryl groups, or perfluorinated aryl groups, including but not limited to perfluorophenyl, perfluoronaphthyl and perfluorobiphenyl.

Together, the cationic and anionic components of the catalysts systems described herein form an activator compound. In one or more embodiments of the present invention, the activator may be N,N-dimethylanilinium-tetra(perfluorophenyl)borate, N,N-dimethylanilinium-tetra(perfluoronaphthyl)borate, N,N-dimethylanilinium-tetrakis(perfluorobiphenyl)borate, N,N-dimethylanilinium-tetrakis(3,5-bis(trifluoromethyl)phenyl)borate, triphenylcarbenium-tetra(perfluorophenyl)borate, triphenylcarbenium-tetra(perfluoronaphthyl)borate, triphenylcarbenium-tetrakis(perfluorobiphenyl)borate, or triphenylcarbenium-tetrakis(3,5-bis(trifluoromethyl)phenyl)borate.

Any catalyst system resulting from any combination of a metallocene compound, a cationic activator component, and an anionic activator component mentioned in the preceding paragraphs shall be considered to be explicitly disclosed herein and may be used in accordance with the present invention in the polymerization of one or more olefin monomers. Also, combinations of two different activators can be used with the same or different metallocene(s).

Suitable activators for the processes of the present invention also include alominoxanes (or alumoxanes) and aluminum alkyls. Without being bound by theory, an alumoxane is typically believed to be an oligomeric aluminum compound represented by the general formula $(R''\text{-Al-O})_n$, which is a cyclic compound, or $R^x\ (R^x\text{-Al-O})_nAlR^x_2$, which is a linear compound. Most commonly, alumoxane is believed to be a mixture of the cyclic and linear compounds. In the general alumoxane formula, $R^x$ is independently a $C_1$-$C_{20}$ alkyl radical, for example, methyl, ethyl, propyl, butyl, pentyl, isomers thereof, and the like, and n is an integer from 1-50. In one or more embodiments, $R^x$ is methyl and n is at least 4. Methyl alumoxane (MAO), as well as modified MAO containing some higher alkyl groups to improve solubility, ethyl alumoxane, *iso*-butyl alumoxane, and the like are useful for the processes disclosed herein.

Further, the catalyst systems suitable for use in the present invention may contain, in addition to the transition metal compound and the activator described above, additional activators (co-activators) and/or scavengers. A co-activator is a compound capable of reacting with the transition metal complex, such that when used in combination with an activator, an active catalyst is formed. Co-activators include alumoxanes and aluminum alkyls.

In some embodiments of the invention, scavengers may be used to "clean" the reaction of any poisons that would otherwise react with the catalyst and deactivate it. Typical aluminum or boron alkyl components useful as scavengers are represented by the general formula $R^xJZ_2$ where J is aluminum or boron, $R^x$ is a $C_1$-$C_{20}$ alkyl radical, for example, methyl, ethyl, propyl, butyl, pentyl, and isomers thereof, and each Z is independently $R^x$ or a different univalent anionic ligand such as halogen (Cl, Br, I), alkoxide ($OR^x$) and the like. Exemplary aluminum alkyls include triethylaluminum, diethylaluminum chloride, ethylaluminium dichloride, tri-iso-butylaluminum, tri-*n*-octylaluminum, tri-*n*-hexylaluminum, trimethylaluminum and combinations thereof. Exemplary boron alkyls include triethylboron. Scavenging compounds may also be alumoxanes and modified alumoxanes including methylalumoxane and modified methylalumoxane.

In some embodiments, the catalyst system used to produce the propylene-based polymers comprises a transition metal component which is a bridged bisindenyl metallocene having the general formula $(In^1)Y(In^2)MX_2$, where $In^1$

and $In^2$ are identical substituted or unsubstituted indenyl groups bound to M and bridged by Y, Y is a bridging group in which the number of atoms in the direct chain connecting $In^1$ with $In^2$ is from 1 to 8 and the direct chain comprises C or Si, and M is a Group 3, 4, 5, or 6 transition metal. $In^1$ and $In^2$ may be substituted or unsubstituted. If $In^1$ and $In_2$ are substituted by one or more substituents, the substituents are selected from the group consisting of a halogen atom, $C_1$ to $C_{10}$ alkyl, $C_5$ to $C_{15}$ aryl, $C_6$ to $C_{25}$ alkylaryl, and N- or P- containing alkyl or aryl. In one or more embodiments, the transition metal component used to produce the propylene-based polymers is μ-dimethylsilylbis(indenyl)hafniumdimethyl.

Ethylene-Based Polymers

In certain embodiments of the present invention, the elastic layer of the nonwoven materials described herein comprises one or more ethylene-based polymers, which may be ethylene homopolymers and/or ethylene copolymers incorporating one or more comonomers. Various types of ethylene-based polymers are known in the art. Exemplary ethylene-based polymers include ethylene-propylene or ethylene-butene copolymers, low-density polyethylene ("LDPE"), linear low-density polyethylene ("LLDPE"), high-density polyethylene ("HDPE"), and polyethylene waxes. The density and melt index of the ethylene-based polymer, as well as its concentration in polymer blends with the propylene-based polymers described above, are selected such that the resulting polymer blends can be processed into fibers or fabrics without dripping, fiber breakage, or other issues that unduly affect fiber and fabric formation or operation of processing equipment.

In one or more embodiments of the invention, the ethylene-based polymer is considered to be crystalline or crystallizable. The term "crystallizable" as used herein refers to those polymers or sequences that are mainly amorphous in the undeformed state, but upon stretching or annealing, become crystalline. Thus, in certain specific embodiments, semi-crystalline ethylene-based polymers may be considered to be crystallizable.

The semi-crystalline ethylene-based polymers used in specific embodiments of this invention may have a crystallinity of from about 2% to about 65% of the crystallinity of 100% crystalline polyethylene. In further embodiments, the semi-crystalline ethylene-based polymers may have a crystallinity of from about 3% to about 50%, or from about 4% to about 40%, or from about 5% to about 30% of the crystallinity of 100% crystalline polyethylene.

Alternately, the ethylene-based polymers used in specific embodiments of the present invention may have higher crystallinity. For example, the polymers may have a crystallinity of from about 35% to about 90%, or from about 40% to about 85%, or from about 45% to about 80%, or from about 50% to about 75%.

In at least one specific embodiment, the ethylene-based polymer may be or include one or more ethylene-α-olefin copolymers, such as ethylene-propylene or ethylene-butene copolymers. The ethylene-α-olefin copolymers may be non-crystalline, e.g., atactic or amorphous, but in certain embodiments the ethylene-α-olefin copolymer is crystalline (including "semi-crystalline"). The crystallinity of the ethylene-α-olefin copolymer is preferably derived from the ethylene, and a number of published methods, procedures and techniques are available for evaluating whether the crystallinity of a particular material is derived from ethylene. The crystallinity of the ethylene-α-olefin copolymer can be distinguished from the crystallinity of the propylene-based polymer by removing the ethylene-α-olefin copolymer from the composition and then measuring the crystallinity of the residual propylene-based polymer. Such crystallinity measured is usually calibrated using the crystallinity of polyethylene and related to the comonomer content. The percent crystallinity in such cases is measured as a percentage of polyethylene crystallinity and thus the origin of the crystallinity from ethylene is established. In some embodiments, the ethylene-based polymer has a melt index greater than about 5 g/10 min or greater than about 75 g/10 min (at 190 °C), for example, up to about 300 g/10 min, 250 g/10 min, or about 200 g/10 min.

In one or more embodiments, the ethylene-α-olefin copolymer may be an ethylene-butene copolymer. Exemplary ethylene-butene copolymers may have a melt index of from about 2 to about 30 g/10 min, or from about 3 to about 25 g/10 min, or from about 4 to about 20 g/10 min. The ethylene-butene copolymers may have a density from about 0.870 to about 0.925 g/cm$^3$, or from about 0.880 to about 0.915 g/cm$^3$, or from about 0.890 to about 0.910 g/cm$^3$. The copolymers may also have a melting point from about 75 to about 125°C, or from about 80 to about 120°C, or from about 85 to about 115°C, or from about 90 to about 110°C. Suitable commercially available ethylene-butene copolymers include, for example, Exact™ copolymers such as Exact 3139 and Exact 3140 available from ExxonMobil Chemical Co. and Engage copolymers available from the Dow Chemical Co.

In one or more embodiments, the ethylene-α-olefin copolymer can include one or more optional polyenes, including particularly a diene; thus, the ethylene-α-olefin copolymer can be an ethylene-propylene-diene (commonly called "EPDM"). The optional polyene is considered to be any hydrocarbon structure having at least two unsaturated bonds wherein at least one of the unsaturated bonds is readily incorporated into a polymer. The second bond may partially take part in polymerization to form long chain branches but preferably provides at least some unsaturated bonds suitable for subsequent curing or vulcanization in post polymerization processes. Examples of ethylene-propylene or EPDM copolymers include V722, V3708P, MDV 91-9, V878 that are available under the trade name Vistalon from ExxonMobil Chemical Company. Additionally, several commercial EPDM polymers are available from The Dow Chemical Co. under the trade names Nordel IP and MG.

Examples of the optional polyene include, but are not limited to, butadiene, pentadiene, hexadiene (e.g., 1,4-hexadiene), heptadiene (e.g., 1,6-heptadiene), octadiene (e.g., 1,7-octadiene), nonadiene (e.g., 1,8-nonadiene), decadiene (e.g., 1,9-decadiene), undecadiene (e.g., 1,10-undecadiene), dodecadiene (e.g., 1,11-dodecadiene), tridecadiene (e.g., 1,12-tridecadiene), tetradecadiene (e.g., 1,13-tetradecadiene), pentadecadiene, hexadecadiene, heptadecadiene, octadecadiene, nonadecadiene, icosadiene, heneicosadiene, docosadiene, tricosadiene, tetracosadiene, pentacosadiene, hexacosadiene, heptacosadiene, octacosadiene, nonacosadiene, triacontadiene, and polybutadienes having a molecular weight (Mw) of less than 1000 g/mol. Examples of straight chain acyclic dienes include, but are not limited to 1,4-hexadiene and 1,6-octadiene. Examples of branched chain acyclic dienes include, but are not limited to 5-methyl-1,4-hexadiene, 3,7-dimethyl-1,6-octadiene, and 3,7-dimethyl-1,7-octadiene. Examples of single ring alicyclic dienes include, but are not limited to 1,4-cyclohexadiene, 1,5-cyclooctadiene, and 1,7-cyclododecadiene. Examples of multi-ring alicyclic fused and bridged ring dienes include, but are not limited to tetrahydroindene; norbornadiene; methyltetrahydroindene; dicyclopentadiene; bicyclo(2.2.1)hepta-2,5-diene; and alkenyl-, alkylidene-, cycloalkenyl-, and cycloalkylidene norbornenes [including, e.g., 5-methylene-2-norbornene, 5-ethylidene-2-norbornene, 5-propenyl-2-norbornene, 5-isopropylidene-2-norbornene, 5-(4-cyclopentenyl)-2-norbornene, 5-cyclohexylidene-2-norbornene, and 5-vinyl-2-norbornene]. Examples of cycloalkenyl-substituted alkenes include, but are not limited to vinyl cyclohexene, allyl cyclohexene, vinylcyclooctene, 4-vinylcyclohexene, allyl cyclodecene, vinylcyclododecene, and tetracyclododecadiene.

Further exemplary ethylene-based polymers suitable for use in the present invention may include LDPE, LLDPE, and HPDE. LDPE is also known as "branched" or "heterogeneously branched" polyethylene because of the relatively large number of long chain branches extending from the main polymer backbone. LDPE may have an MWD of about 1.5 to about 10, a melt index greater than about 0.25, and includes at least 99 wt% of ethylene monomer units. In certain embodiments, LDPE polymers may have a density from about 0.89 g/cm$^3$ to 0.94 g/cm$^3$, an MWD from about 4 to about 10, and a melt index from about 0.25 to about 50 g/10 min. In other embodiments, LDPE polymers may have a density from 0.89 g/cm$^3$ to 0.94 g/cm$^3$, an MWD from about 4 to about 7, and a melt index from about 0.25 to about 30 g/10 min.

LLDPE is typically a copolymer of ethylene and one or more other $\alpha$-olefins. Such $\alpha$-olefins will generally have 3 to 20 carbon atoms. In certain embodiments, the $\alpha$-olefins are selected from butene-1, pentene-1, 4-methyl-1-pentene, hexene-1, octene-1, decene-1, and combinations thereof. In other embodiments, the $\alpha$-olefins are selected from butene-1, hexene-1, octene-1, and combinations thereof. LLDPEs intended for use herein may be produced from any suitable catalyst system including conventional Ziegler-Natta type catalyst systems and metallocene based catalyst systems. In certain embodiments, LLDPE polymers may have a density from about 0.89 g/cm$^3$ to 0.94 g/cm$^3$, or from about 0.91 g/cm$^3$ to about 0.94 g/cm$^3$. In the same or other embodiments, the melting point of the LLDPE, as measured by a differential scanning calorimeter (DSC), may be from about 110 °C to about 150 °C, or from about 115 °C to about 140 °C. Further, the LLDPE may have an MFR from about 10 g/10 min to about 250 g/10 min, or from about 20 g/10 min to about 200 g/10 min, or from about 50 g/10 min to about 180 g/10 min. Exemplary linear low density polyethylenes include those available commercially from ExxonMobil Chemical Company under the name Exceed™ and DNDA polymers available from the Dow Chemical Co.

HDPE is a semicrystalline polymer available in a wide range of molecular weights as indicated by either MI or HLMI (melt index or high-load melt index) and typically has an ethylene content of at least 99 mole percent (based upon the total moles of HDPE). If incorporated into the HDPE, comonomers may be selected from butene and other $C_3$ to $C_{20}$ alpha olefins. In one embodiment, the comonomers are selected from 1-butene, 4-methyl-1-pentene, 1-hexene, and 1-octene, and mixtures thereof. In certain embodiments, comonomers may be present in the HDPE up to about 0.68 mole percent, based on the total moles of the HDPE. In further embodiments, comonomers are present in the HDPE up to about 0.28 mole percent. The density of HDPE is typically greater than 0.94 g/cm$^3$. In some embodiments, the HDPE may have a density from about 0.94 g/cm$^3$ to about 0.97 g/cm$^3$, or from about 0.95 g/cm$^3$ to about 0.965 g/cm$^3$. In the same or other embodiments, the melting point of the HDPE, as measured by a differential scanning calorimeter (DSC), may be from about 120 °C to about 150 °C, or from about 125 °C to about 135 °C. The HDPE may have a melt index from about 0.1 g/10 min to about 20.0 g/10 min, or from about 0.2 g/10 min to about 15.0 g/10 min, or from about 0.6 g/10 min to about 10.0 g/10 min. Further, the HDPE may have an MFR from about 1 g/10 min to about 35 g/10 min, or from about 5 g/10 min to about 30 g/10 min, or from about 7 g/10 min to about 25 g/10 min.

HDPE includes polymers made using a variety of catalyst systems including Ziegler-Natta, Phillips-type catalysts, chromium based catalysts, and metallocene catalyst systems, which may be used with alumoxane and/or ionic activators. Processes useful for preparing such polyethylenes include gas phase, slurry, solution processes, and the like. Exemplary HDPEs include, but are not limited to, those commercially available as Marlex TR-130 from Phillips Chemical Company, M6211 from Equistar Chemical Co., Dow XU 6151.302 from Dow Chemical Co., and HD 7845, HD 6733, HD 6719, HTA 002, HTA 108, HYA 108, Paxon 4700, AD60 007, AA 45004, BA50 100, Nexxstar™ 0111 and MA001 from ExxonMobil Chemical Company.

In some embodiments of the present invention, the ethylene-based polymer may be an ethylene wax. In such embodiments, the ethylene wax may have an $M_w$ less than about 65,000 g/mol, or less than about 50,000 g/mol, or less than about 45,000 g/mol, or less than about 40,000 g/mol, or less than about 35,000 g/mol or less than about 30,000 g/mol, or less than about 25,000 g/mol, or less than about 20,000 g/mol, or less than about 15,000 g/mol, or less than about 10,000 g/mol.

Ethylene waxes suitable for use as the ethylene-based polymer may be polar or nonpolar, branched or unbranched, and may be prepared using any suitable catalyst system including Ziegler-Natta catalysts, Phillips-type catalysts, chromium based catalysts, and metallocene catalyst systems. The ethylene waxes may be low, medium, or high density, such that in some embodiments of the invention the waxes may have a density ranging from about 0.88 g/cm$^3$ to about 1.0 g/cm$^3$, or from about 0.89 g/cm$^3$ to about 0.99 g/cm$^3$, or from about 0.90 g/cm$^3$ to about 0.98 g/cm$^3$. In the same or other embodiments, the waxes may have a viscosity from about 50 to about 2000 mPa·s, or from about 100 to about 1900 mPa·s, or from about 150 to about 1800 mPa·s.

Ethylene waxes suitable for use in the present invention may have a melt index from about 5 to about 300 g/10 min, or from about 5 to about 250 g/10 min, or from about 5 to about 200 g/10 min, or from about 5 to about 175 g/10 min, or from about 5 to about 150 g/10 min, or from about 5 to about 100 g/10 min, or from about 5 to about 50 g/10 min. In one or more embodiments, the ethylene wax may be linear. In the same or other embodiments, the ethylene wax may have a high crystallinity, such as for example from about 40 to about 85%, or from about 45 to about 80%, or from about 50 to about 75%.

Exemplary ethylene waxes suitable for use as the ethylene-based polymer in the present invention include, but are not limited to, those commercially available under the names Licowax and Licocene (particularly Licowax PE 130, Licowax PE 520, and Licocene PE 5301) from Clariant Chemicals, Polywax (particularly Polywax 3000) from Baker Hughes, and Honeywell A-C performance additives (particularly A-C 9) from Honeywell International.

In one or more embodiments, the ethylene-based polymer can be grafted or functionalized using one or more grafting monomers. The grafting monomer can be or include at least one ethylenically unsaturated carboxylic acid or acid derivative, such as an acid anhydride, ester, salt, amide, imide, acrylates or the like. Illustrative monomers include but are not limited to acrylic acid, methacrylic acid, maleic acid, fumaric acid, itaconic acid, citraconic acid, mesaconic acid, maleic anhydride, 4-methyl cyclohexene-1,2- dicarboxylic acid anhydride, bicyclo(2.2.2)octene-2,3-dicarboxylic acid anhydride, 1,2,3,4,5,8,9,10-octahydronaphthalene-2,3-dicarboxylic acid anhydride, 2-oxa-1,3-diketospiro(4.4)nonene, bicyclo(2.2.1)heptene-2,3-dicarboxylic acid anhydride, maleopimaric acid, tetrahydrophthalic anhydride, norbornene-2,3-dicarboxylic acid anhydride, nadic anhydride, methyl nadic anhydride, himic anhydride, methyl himic anhydride, and 5-methylbicyclo(2.2.1)heptene-2,3-dicarboxylic acid anhydride. Other suitable grafting monomers include methyl acrylate and higher alkyl acrylates, methyl methacrylate and higher alkyl methacrylates, acrylic acid, methacrylic acid, hydroxy-methyl methacrylate, hydroxyl-ethyl methacrylate and higher hydroxy- alkyl methacrylates and glycidyl methacrylate. Maleic anhydride is a preferred grafting monomer. In certain embodiments herein, the ethylene-based polymer may be a grafted polymer having a polyethylene backbone with maleic anhydride grafted to the backbone. In certain other embodiments, the ethylene-based polymer may be a polyethylene wax having at least one functionalized end group, such as for example vinyl tetramethylene (VTM), providing the polymer with a polar character.

## Nonwoven Materials

The present invention is directed to nonwoven materials comprising at least one elastic layer, wherein the elastic layer comprises a propylene-based polymer and an ethylene-based polymer as described previously. In some embodiments, the nonwoven materials additionally comprise one or more facing layers positioned on one or both sides of the elastic layer(s). As used herein, "nonwoven" refers to a textile material that has been produced by methods other than weaving. In nonwoven fabrics, the fibers are processed directly into a planar sheet-like fabric structure by passing the intermediate one-dimensional yarn state, and then are either bonded chemically, thermally, or interlocked mechanically (or both) to achieve a cohesive fabric.

In one or more embodiments of the present invention, the elastic layer comprises from about 70 to about 99 wt%, or from about 75 to about 97 wt%, or from about 80 to about 95 wt%, or from about 85 to about 90 wt% of the propylene-based polymer. In such embodiments, the balance of the elastic layer may comprise one or more ethylene-based polymers. Stated another way, the elastic layer may comprise from about 1 to about 30 wt%, or from about 3 to about 25 wt%, or from about 5 to about 20 wt%, or from about 10 to about 15 wt% of one or more ethylene-based polymers.

The present invention is directed not only to nonwoven fabrics, but also to processes for forming nonwoven fabrics comprising the polymer blends described herein. In one or more embodiments, such methods comprise the steps of forming a polymer blend comprising a propylene-based polymer and one or more ethylene-based polymers, forming fibers comprising the polymer blend, and forming an elastic nonwoven layer from the fibers. In further embodiments, the process may further comprise the steps of forming one or more nonwoven facing layers, and disposing the elastic layer or layers upon the facing layer. Optionally, one or more facing layers may additionally be disposed upon the elastic layer or layers, such that the elastic layers are sandwiched between the facing layers.

Molten blends comprising the propylene-based polymer and the ethylene-based polymer or polymers may be prepared by any method that guarantees an intimate mixture of the components. Blending and homogenation of polymers are well known in the art and include single and twin screw mixing extruders, static mixers for mixing molten polymer streams of low viscosity, impingement mixers, as well as other machines and processes designed to disperse the first and second polymers in intimate contact. For example, the polymer components and other minor components can be blended by melt blending or dry blending in continuous or batch processes. These processes are well known in the art and include single and twin screw compounding extruders, as well as other machines and processes designed to melt and homogenize the polymer components intimately. The melt blending or compounding extruders usually are equipped with a pelletizing die to convert the homogenized polymer into pellet form. The homogenized pellets can then be fed to the extruder of fiber or nonwoven process equipment to produce fiber or fabrics. Alternately, the propylene-based and ethylene-based polymers may be dry blended and fed to the extruder of the nonwoven process equipment.

The nonwoven materials of the present invention can be formed by any method known in the art. For example, in certain embodiments herein, the elastic layer or layers of the fabrics of the invention are produced by a spunbond or meltblown process. When the fabrics further comprise one or more facing layers, the facing layers may also be produced by a meltblown process, or they may be produced by a spunbond or spunlace process.

As used herein, "meltblown" refers to fibers formed by extruding a molten thermoplastic material at a certain processing temperature through a plurality of fine, usually circular, die capillaries as molten threads or filaments into high velocity, usually hot, gas streams which attenuate the filaments of molten thermoplastic material to reduce their diameter, which may be as small as microfiber diameter. Thereafter, the meltblown fibers are carried by the high velocity gas stream and are deposited on a collecting surface to form a web or nonwoven fabric of randomly dispersed meltblown fibers. Such a process is generally described in, for example, U.S. Patent Nos. 3,849,241 and 6,268,302. Conventional meltblown fibers made with high MFR polypropylene are commonly microfibers that are either continuous or discontinuous and are generally smaller than about 10 microns, however certain high throughput processes such as those described herein may produce fibers having diameters greater than 10 microns, such as from about 10 to about 30 microns, or about 20 to about 30 microns. The term meltblowing as used herein is meant to encompass the meltspray process.

Commercial meltblown processes utilize extruders having a relatively high throughput, in excess of 0.3 grams per hole per minute ("ghm"), or in excess of 0.4 ghm, or in excess of 0.5 ghm, or in excess of 0.6 ghm, or in excess of 0.7 ghm. The fibers and fabrics of the present invention may be produced using commercial meltblown processes, or in test or pilot scale processes.

As used herein, "spunbond" is used to refer to processes in which polymer is supplied to a heated extruder to melt and homogenize the polymers. The extruder supplies melted polymer to a spinnerette where the polymer is fiberized as passed through fine openings arranged in one or more rows in the spinnerette, forming a curtain of filaments. The filaments are usually quenched with air at a low temperature, drawn, usually pneumatically, and deposited on a moving mat, belt or "forming wire" to form the nonwoven fabric. See, for example, in U.S. Pat. Nos. 4,340,563; 3,692,618; 3,802,817; 3,338,992’ 3,341,394; 3,502,763; and U.S. Pat. No. 3,542,615. The term spunbond as used herein is meant to include spunlace processes, in which the filaments are entangled to form a web such as by using high-speed jets of water (known as "hydroentanglement").

Fibers produced in the spunbond process are usually in the range of from about 10 to about 50 microns in diameter, depending on process conditions and the desired end use for the fabrics to be produced from such fibers. For example, increasing the polymer molecular weight or decreasing the processing temperature results in larger diameter fibers. Changes in the quench air temperature and pneumatic draw pressure also have an effect on fiber diameter.

The nonwoven materials described herein may be a single layer, or may be multilayer laminates. One application is to make a laminate (or "composite") from meltblown fabric ("M") and spunbond fabric ("S"), which combines the advantages of strength from spunbonded fabric and greater barrier properties of the meltblown fabric. A typical laminate or composite has three or more layers, such as for example a meltblown layer(s) sandwiched between two or more spunbonded layers, or "SMS" fabric composites. Examples of other combinations are SSMMSS, SMMS, and SMMSS composites. Composites can also be made of the elastic layers of the invention with other materials, either synthetic or natural, to produce useful articles.

In certain embodiments, the nonwoven materials of the invention comprise one or more elastic layers comprising a propylene-based polymer and one or more ethylene-based polymers as previously described and further comprise one or more facing layers positioned on one or both sides of the elastic layer(s). The facing layer or layers may comprise any material known in the art to be suitable for use in such layers. Examples of suitable facing layer materials include, but are not limited to, any available material typically used as a facing layer, such as polypropylene (PP), polyethylene (PE), polyethylene terephthalate (PET), polylactic acid (PLA), and polymer or fiber blends of two or more of the foregoing.

A variety of additives may be incorporated into the polymers used to make the fibers and fabrics described herein, depending upon the intended purpose. Such additives may include, but are not limited to, stabilizers, antioxidants, fillers, colorants, nucleating agents, dispersing agents, mold release agents, slip agents, fire retardants, plasticizers, pigments, vulcanizing or curative agents, vulcanizing or curative accelerators, cure retarders, processing aids, tackifying resins, and the like. Other additives may include fillers and/or reinforcing materials, such as carbon black, clay, talc, calcium carbonate, mica, silica, silicate, combinations thereof, and the like. Primary and secondary antioxidants include, for example, hindered phenols, hindered amines, and phosphates. Nucleating agents include, for example, sodium benzoate and talc. Also, to improve crystallization rates, other nucleating agents may also be employed such as Ziegler-Natta catalyzed olefin products or other highly crystalline polymers. Other additives such as dispersing agents, for example, Acrowax C, can also be included. Slip agents include, for example, oleamide and erucamide. Catalyst deactivators are also commonly used, for example, calcium stearate, hydrotalcite, and calcium oxide, and/or other acid neutralizers known in the art.

The nonwoven products described above may be used in many articles such as hygiene products including, but not limited to, diapers, feminine care products, and adult incontinent products. The nonwoven products may also be used in medical products such as sterile wrap, isolation gowns, operating room gowns, surgical gowns, surgical drapes, first aid dressings, and other disposable items. Further applications for nonwoven products such as those described herein include clothing, filter media, and sorbent products, among others.

Properties of Nonwoven Materials

Nonwoven materials comprising an elastic layer formed from blends of a propylene-based polymer and one or more ethylene-based polymers as described above exhibit favorable tensile and elastic properties when compared to materials previously known in the art. Neat fibers of propylene-based polymers typically show the highest elastic response compared to fibers comprising propylene-based polymers in combination with other blend partners. It is not practical (and in some cases not even possible), however, to process neat propylene-based elastomers on standard commercial fiber spinning and nonwoven fabric equipment due to blocking and other manufacturing issues. To resolve such issues, a crystalline or crystallizable blend partner is combined with the propylene-based polymer. The blend partner typically chosen is polypropylene.

It has been unexpectedly found that the use of ethylene-based polymers as a blend partner allows similar processability when compared to previous blends of propylene-based polymers with polypropylene, while offering improved tensile properties and enhanced elasticity. Elasticity is typically assessed by measurement of parameters such as the area within a hysteresis curve (lower values indicate higher elasticity), peak load, permanent set (lower values indicate higher elasticity), and retractive force measured at 50% of maximum elongation (higher values indicate higher elasticity). These parameters may be derived from multi-cycle hysteresis measurements such as those shown in Figures 1a and 1b herein.

As reported herein, first and second cycle hysteresis is determined as follows. The method is directed to the measurement of elastic recovery and permanent deformation of elastic fabrics after repeated load/unload cycles. An elastic fabric is stretched two times to 100% elongation at a cross-head speed of 500 mm/min. When this point is reached, the fabric is held for 1 second, and returned to its starting position at the same cross-head speed of 500 mm/min. When the fabric returns to its original unstretched position, it is kept for 30 seconds. After this period, the percent elongation reached at a load of 0.1N is measured. This value is used to calculate the elastic recovery.

As reported herein, elongation is determined according to EDANA test method WSP 110.4B.

As reported herein, tensile strength is determined according to EDANA test method WSP 110.4B.

As reported herein, permanent set is determined as follows. This method is directed to the measurement of elastic recovery and permanent deformation of elastic fabrics after repeated load/unload cycles. An elastic fabric is stretched two times to 100% elongation at a cross-head speed of 500 mm/min. When this point is reached, the fabric is held for 1 second, and returned to its starting position at the same cross-head speed of 500 mm/min. When the fabric returns to its original unstretched position, it is kept for 30 seconds. After this period, the percent elongation reached at a load of 0.1N is measured. This value is used to calculate the elastic recovery.

In one or more embodiments, fibers and/or elastic layers comprising blends of propylene-based and ethylene-based polymers according to the invention may have a peak load of less than about 3 lb (13.3 N), or less than about 2.5 lb (11.1 N), or less than about 2 lb (8.9 N), as determined by a $1^{st}$ cycle hysteresis loop. In the same or other embodiments, the fibers or elastic layers may have a peak load at least about 1 lb (4.4 N), or at least about 1.5 lb (6.7 N), or at least about 2 lb (8.9 N) less than the peak load of a fiber or elastic layer comprising an equal amount of a propylene homopolymer in place of the ethylene-based polymer. Further, the fibers or elastic layers may have a peak load at least about 1 lb (4.4 N), or at least about 1.5 lb (6.7 N), or at least about 2 lb (8.9 N) less than the peak load of a fiber or elastic layer comprising the propylene-based polymer alone.

In one or more embodiments, the nonwoven compositions of the invention (for example, as a single elastic layer or an elastic layer combined with additional facing or intermediate layers) may have a peak cross direction (CD) elongation greater than about 210%, or greater than about 225%, or greater than about 250%. In the same or other embodiments, the nonwoven compositions may have a peak CD elongation at least about 15%, or at least about 20%, or at least about 25%, or at least about 30%, or at least about 40% higher than that of a composition wherein the elastic layer comprises the propylene-based elastomer alone.

In one or more embodiments, the nonwoven compositions of the invention may have a peak CD tensile strength greater than about 22 N/5 cm, or greater than about 22.5 N/5 cm, or greater than about 23 N/5 cm, or greater than about 23.5 N/5 cm, or greater than about 24 N/5 cm, or greater than about 25 N/5 cm. In the same or other embodiments, the nonwoven compositions may have a peak CD tensile strength at least about 1 N/5 cm, or at least about 1.5 N/5 cm, or at least about 2 N/5 cm, or at least about 2.5 N/5 cm greater than that of a composition wherein the elastic layer comprises the propylene-based elastomer alone.

In one or more embodiments, the nonwoven compositions of the invention may have a $1^{st}$ cycle hysteresis less than about 75%, or less than about 73%, or less than about 71%. In the same or other embodiments, the nonwoven compositions may have a $2^{nd}$ cycle hysteresis less than about 58%, or less than about 57.5%, or less than about 57%, or less than about 56%, or less than about 55%. Further, the nonwoven compositions may have a first or second cycle hysteresis at least about 1.5%, or at least about 2%, or at least about 2.5%, or at least about 3% less than that of a composition wherein the elastic layer comprises the propylene-based elastomer alone.

In one or more embodiments, the nonwoven compositions of the invention may have a $1^{st}$ cycle permanent set less than about 29%, or less than about 27%, or less than about 25%. In the same or other embodiments, the nonwoven compositions may have a $2^{nd}$ cycle permanent set than about 18%, or less than about 17%, or less than about 16%, or less than about 15%. Further, the nonwoven compositions may have a first or second cycle permanent set at least about 0.25%, or at least about 0.5%, or at least about 1.0%, or at least about 1.5%, or at least about 2.0%, or at least about 2.5% less than that of a composition wherein the elastic layer comprises the propylene-based elastomer alone.

In one or more embodiments, the nonwoven compositions of the invention may have a peak tensile strength greater than or equal to the tensile strength of a composition wherein the elastic layer comprises the propylene-based elastomer alone and a permanent set equal to or less than the permanent set of a composition wherein the elastic layer comprises the propylene-based elastomer alone. Further, in the same or other embodiments, the nonwoven compositions of the invention may have a peak tensile strength greater than or equal to the tensile strength of a composition wherein the elastic layer comprises the propylene-based elastomer and an equal amount of propylene homopolymer (e.g having an MFR of about 80 g/10 min) in place of the ethylene-based polymer, and a permanent set less than or equal to the permanent set of a composition wherein the elastic layer comprises the propylene-based elastomer and an equal amount of propylene homopolymer in place of the ethylene-based polymer.

## Examples

The following designations are used for polymers employed in the illustrative examples herein.

PBP1 is a propylene-based polymer comprising about 15 wt% ethylene and having an MFR of about 18 g/10 min.
PBP2 is a propylene-based polymer comprising a blend of about 85 wt% of a propylene-ethylene copolymer having an ethylene content of about 15 wt% and about 15 wt% of a propylene homopolymer. PBP2 has an MFR of about 80 g/10 min.
PBP3 is a propylene-based polymer comprising about 15 wt% ethylene and having an MFR of about 3 g/10 min.
EBP1 is an ethylene-based polymer wax comprising an ethylene homopolymer and having an Mw of about 7000.
EBP2 is an ethylene-based polymer wax having an Mw of about 6200.
EBP3 is an ethylene-based polymer comprising an ethylene homopolymer and having a melt index of about 280 g/10 min.
EBP4 is an ethylene-based polymer comprising ethylene and hexene and having a melt index of about 7.5 g/10 min.
EBP5 is an ethylene-based polymer comprising ethylene and hexene and having a melt index of about 15 g/10 min.
EBP6 is a high density ethylene-based polymer comprising ethylene and hexene and having a melt index of about 19 g/10 min.

### *Example 1*

Standard commercial fiber spinning equipment having a throughput of 0.4 grams/hole/minute (ghm) was used to form partially oriented yarns (72 filaments) from an inventive blend of 85 wt% PBP1 (visbroken to an MFR of about 40 g/10 min) and 15 wt% EPB1. The fibers were drawn down at 1500 m/min. Comparative fibers were also prepared from PBP2 using the same equipment and method. First and second cycle hysteresis results are shown in Figure 1a for the inventive blend and in Figure 1b for the comparative material.

As shown in Figures 1a and 1b, addition of the ethylene-based polymer offers a favorable balance of processability with better elasticity than when polypropylene is used as a blend partner (as in the comparative polymer shown in Figure 1b). This is evidenced by the significantly reduced area within the hysteresis curve for the blend of Figure 1a when compared to Figure 1b. Additionally, the lower load value at low strains observed in Figure 1a indicates easier drawability.

*Example 2*

Partially oriented yarns were spun from a comparative polymer blend and two inventive polymer blends using the same equipment and method as in Example 1. The comparative polymer blend comprised 85 wt% PBP1 and 15 wt% of a propylene homopolymer having an MFR of about 35 g/10 min. First and second cycle hysteresis loops for the comparative blend are shown in Figure 2a. The first inventive polymer blend comprised 85 wt% PBP1 and 15 wt% EBP2. First and second cycle hysteresis loops for the first inventive blend are shown in Figure 2b. The second inventive polymer blend comprised 87.4 wt% PBP1, 5.5 wt% EBP1, and 7.1 wt% EBP3. First and second cycle hysteresis loops for the second inventive blend are shown in Figure 2c. In all cases, PBP1 was first visbroken to an MFR of about 40 g/10 min before being blended with the designated blend partners.

Figures 3a, 3b, and 3c are enlarged views of the hysteresis curves shown in Figures 2a, 2b, and 2c, respectively, and illustrate the permanent set measurements for each of the polymer blends. Similarly, Figures 4a, 4b, and 4c are enlarged views of the hysteresis curves shown in Figures 2a, 2b, and 2c, respectively, and illustrate the retractive force measured for each of the polymer blends.

As shown in the Figures, the polymer blends that incorporate one or more ethylene-based polymers are observed to have a smaller hysteresis loop area and lower peak force, which are desirable for easier drawability. Further, the permanent set values for the inventive blends are also lower, indicating a better elastic response. Retractive force values appear to be similar for the inventive blends and for the comparative blend.

The data of examples 1 and 2 show that ethylene-based polymers are a desirable alternative to polypropylene as a blend partner for elastic fibers and fabrics made from propylene-based polymers, providing a higher level of elastic response. While not wishing to be bound by theory, it is believed that a strong melt interaction occurs between polypropylene and propylene-based polymers, creating an unfavorable blend morphology that deteriorates elastic response. The greater immiscibility between ethylene-based polymers and propylene-based polymers results in a non-interacting phase-separated blend morphology and leads to a higher elastic response. Additionally, the comparatively fast crystallization of the ethylene-based polymer aids in fiber set-up.

*Example 3*

Elastic nonwoven fabric layers were produced from a comparative propylene-based polymer and three inventive polymer blends as shown in Table 1. The polymer and the polymer blends were melted and sprayed directly onto a first facing layer. A second facing layer was then applied to the hot surface of the elastic layer to form a three layer laminate material. Both of the first and second facing layers were spunlace fabrics made from a 50/50 blend of polypropylene and polyethylene terephthalate (PET) carded staple fibers available from Jacob Holm.

**Table 1**

| Laminate ID | Composition (wt%) | Throughput (ghm) | Extruder RPM | Die pressure (psi) | Die temp (°F) | Melt temp (°F) | Air temp (°F) |
|---|---|---|---|---|---|---|---|
| A | 100% PBP3 | 0.2 | 16.1 | 1719 | 625 | 620 | 626 |
| B | 90% PBP1<br>10% EBP4 | 0.42 | 40 | 2450 | 575 | 554 | 550 |
| C | 90% PBP1<br>10% EBP5 | 0.42 | 34.6 | 1579 | 597 | 574 | 585 |
| D | 90% PBP1<br>10% EBP 6 | 0.41 | 34.6 | 1920 | 576 | 555 | 563 |

The tensile and elastic properties of the laminates shown in Table 1 were tested, and the results are shown in Figures 5a and 5b. As shown in Figure 5a, laminates made with a blend of propylene-based polymer and ethylene-based polymer (B, C, and D) provide a lower initial force of stretch than the comparative laminate (A). As shown in Figure 5b, laminates B, C, and D similarly have improved tensile strength compared to laminate A. Figures 5a and 5b demonstrate that blending low levels of an ethylene-based polymer with a propylene-based polymer improves tensile properties while at the same time improving the stretch behavior of a laminate by providing so-called "soft" open force, or a low initial force to stretch. Of the inventive laminates, the best combination of tensile and elastic properties was observed for laminate D.

As shown in Figure 6, inventive laminates B, C, and D have lower hysteresis and permanent set than comparative laminates made with a core layer of propylene-based polymer alone such as laminate A. Lower hysteresis and lower permanent set are both desirable because they indicate better elastic behavior.

Having described the various aspects of the compositions herein, further specific embodiments of the invention include those set forth in the following lettered paragraphs:

A. A nonwoven composition having at least one elastic layer, wherein the elastic layer comprises (i) from about 70 to about 99 wt% of a propylene-based polymer, the propylene-based polymer having from about 75 to about 95 wt% propylene and from about 5 to about 25 wt% ethylene and/or a $C_4$-$C_{12}$ $\alpha$-olefin, a triad tacticity greater than about 90%, and a heat of fusion less than about 75 J/g, and (ii) from about 1 to about 30 wt% of one or more ethylene-based polymers, wherein the ethylene-based polymer comprises from about 65 to 100 wt% ethylene and from 0 to about 35 wt% of one or more $C_3$-$C_{12}$ $\alpha$-olefins.

B. The composition of paragraph A, wherein the propylene-based polymer comprises from about 8 to about 20 wt% ethylene.

C. The composition of any of paragraphs A through B, wherein the ethylene-based polymer has a melt index greater than about 5 g/10 min, for example up to about 300 g/10 min or 175 g/10 min (at 190°C).

D. The composition of any of paragraphs A through C, wherein the ethylene-based polymer has a melt index greater than about 75 g/10 min.

E. The composition of any of paragraphs A through D, wherein the ethylene-based polymer has a melt index of from about 5 to about 175 g/10 min.

F. The composition of any of paragraphs A through E, wherein the ethylene-based polymer is a polyethylene wax, preferably having a $M_w$ of less than about 65,000 g/mol.

G. The composition of any of paragraphs A through F, wherein the elastic layer comprises from about 3 to about 25 wt% or from about 5 to about 20 wt% of the ethylene-based polymer.

H. The composition of any of paragraphs A through G, wherein the propylene-based polymer has a melt flow rate (230°C, 2.16 kg) greater than about 10 g/10 min or greater than about 25 g/10 min.

I. The composition of any of paragraphs A through H, wherein the elastic layer has a peak load of less than about 3 lb (13.3 N), as determined by a 1st cycle hysteresis loop.

J. The composition of any of paragraphs A through I, wherein the elastic layer has a peak load at least about 1.5 lb (6.7 N) less than the peak load of an elastic layer comprising from about 1 to 30 wt% of propylene homopolymer having an MFR of about 80 g/10 min instead of the ethylene-based polymer, as determined by a 1st cycle hysteresis loop.

K. The composition of any of paragraphs A through J, wherein the composition has a peak CD elongation greater than about 225%.

L. The composition of any of paragraphs A through K, wherein the composition has a peak CD elongation at least about 20% higher than that of a composition wherein the elastic layer comprises the propylene-based elastomer alone or comprises no ethylene-based polymer.

M. The composition of any of paragraphs A through L, wherein the composition has a peak CD tensile strength greater than about 22 N/5 cm.

N. The composition of any of paragraphs A through M, wherein the composition has a peak CD tensile strength at least about 2 N/5 cm greater than that of a composition wherein the elastic layer comprises the propylene-based elastomer alone or comprises no ethylene-based polymer.

O. The composition of any of paragraphs A through N, wherein the composition has a 1st cycle hysteresis less than about 75%.

P. The composition of any of paragraphs A through O, wherein the composition has a 1st cycle permanent set less than about 29%.

Q. The composition of any of paragraphs A through P, wherein the composition has a peak tensile strength greater than or equal to the peak tensile strength of a composition wherein the elastic layer comprises the propylene-based elastomer alone or comprises no ethylene-based polymer, and a permanent set equal to or less than the permanent set of a composition wherein the elastic layer comprises the propylene-based elastomer alone or comprises no ethylene-based polymer.

R. The composition of any of paragraphs A through Q, wherein the composition has a peak tensile strength greater than or equal to the tensile strength of a composition wherein the elastic layer comprises the propylene-based elastomer and an equal amount of propylene homopolymer having an MFR of about 80 g/10 min in place of the ethylene-based polymer, and a permanent set equal to or less than the permanent set of a composition wherein the elastic layer comprises the propylene-based elastomer and an equal amount of propylene homopolymer having an MFR of about 80 g/10 min in place of the ethylene-based polymer.

S. The composition of any of paragraphs A through R, wherein the elastic layer is formed by spunbonding or meltblowing.

T. The composition of any of paragraphs A through S, further comprising one or more facing layers.

U. The composition of paragraph T, wherein the facing layer comprises polypropylene, polyethylene terephthalate, or a combination thereof.

V. An article comprising the composition of any of paragraphs A through U.

W. A nonwoven composition having at least one elastic layer, wherein the elastic layer comprises (i) from about 80 to about 90 wt% of a propylene-based polymer, the propylene-based polymer having from about 80 to about 90 wt% propylene and from about 10 to about 20 wt% ethylene, a triad tacticity greater than about 90%, a heat of fusion less than about 75 J/g, and an MFR (230°C, 2.16 kg) from about 2 to about 75, or about 5 to 50, or about 35 to about 45 g/10 min, and (ii) from about 5 to about 20 wt% of a polyethylene wax, wherein the polyethylene wax has an MW of about less than about 25,000, or less than about 15,000, or less than about 10,000, or from about 6000 to about 7500, and a density from about 0.925 to about 0.945 g/cm$^3$.

X. A nonwoven composition having at least one elastic layer, wherein the elastic layer comprises (i) from about 85 to about 95 wt% of a propylene-based polymer, the propylene-based polymer having from about 80 to about 90 wt% propylene and from about 10 to about 20 wt% ethylene, a triad tacticity greater than about 90%, a heat of fusion less than about 75 J/g, and an MFR (230°C, 2.16 kg) from about 15 to about 20 g/10 min, and (ii) from about 5 to about 15 wt% of an ethylene-based polymer, wherein the ethylene-based polymer comprises from about 65 to 100 wt% ethylene and from 0 to about 35 wt% of hexane and has a melt index from about 2 to about 50, about 2 to about 30, or about 5 to about 20 g/10 min.

Y. A process for producing a nonwoven composition comprising forming a polymer blend comprising from about 70 to about 99 wt% of a propylene-based polymer and from about 1 to about 30 wt% of an ethylene-based polymer, wherein the propylene-based polymer has from about 75 to about 95 wt% propylene and from about 5 to about 25 wt% ethylene and/or a $C_4$-$C_{12}$ $\alpha$-olefin, a triad tacticity greater than about 90%, and a heat of fusion less than about 75 J/g, and wherein the ethylene-based polymer comprises from about 65 to 100 wt% ethylene and from 0 to about 35 wt% of one or more $C_3$-$C_{12}$ $\alpha$-olefins; forming fibers comprising the polymer blend; and forming an elastic nonwoven layer from the fibers.

Z. The process of paragraph Y, wherein the propylene-based polymer comprises from about 8 to about 20 wt% ethylene.

AA. The process of any of paragraphs Y through Z, wherein the ethylene-based polymer has a melt index greater than about 5 g/10 min, greater than about 75 g/10 min, or from about 5 to about 175 g/10 min.

BB. The process of any of paragraphs Y through AA, wherein the ethylene-based polymer is a polyethylene wax.

CC. The process of any of paragraphs Y through BB, wherein the polymer blend is formed by dry blending or melt mixing.

DD. The process of any of paragraphs Y through CC, wherein the elastic nonwoven layer comprises from about 3 to about 25 wt% or from about 5 to about 20 wt% of the ethylene-based polymer.

EE. The process of any of paragraphs Y through DD, wherein the propylene-based polymer has a melt flow rate (230°C, 2.16 kg) greater than about 10 g/10 min or greater than about 25 g/10 min.

FF. The process of any of paragraphs Y through EE, wherein the composition has a peak tensile strength greater than or equal to the tensile strength of a composition wherein the elastic layer comprises the propylene-based elastomer alone, and a permanent set equal to or less than the permanent set of a composition wherein the elastic layer comprises the propylene-based elastomer alone.

GG. The process of any of paragraphs Y through FF, wherein the elastic nonwoven layer is formed by spunbonding or meltblowing.

HH. The process of any of paragraphs Y through GG, further comprising providing one or more facing layers, and disposing the elastic nonwoven layer upon the facing layer.

II. The process of any of paragraphs Y through HH, wherein the one or more facing layers is a spunbond layer, and the elastic nonwoven layer is a meltblown layer.

JJ. The process of any of paragraphs Y through II, wherein the facing layer comprises polypropylene, polyethylene terephthalate, or a combination thereof.

KK. An article comprising an elastic nonwoven layer formed by the process of any of paragraphs Y through JJ.

LL. A nonwoven composition of any of paragraphs A-X, wherein the nonwoven composition has at least one of:

a. a peak CD elongation greater than about 225%;
b. a peak CD tensile strength greater than about 22 N/5 cm;
c. a 1$^{st}$ cycle hysteresis less than about 75%; and
d. a 1$^{st}$ cycle permanent set less than about 29%.

Certain embodiments and features have been described using a set of numerical upper limits and a set of numerical lower limits. It should be appreciated that ranges from any lower limit to any upper limit are contemplated unless otherwise indicated. Certain lower limits, upper limits and ranges appear in one or more claims below. All numerical values are "about" or "approximately" the indicated value, and take into account experimental error and variations that would be expected by a person having ordinary skill in the art.

Various terms have been defined above. To the extent a term used in a claim is not defined above, it should be given the broadest definition persons in the pertinent art have given that term as reflected in at least one printed publication or issued patent. Furthermore, all patents, test procedures, and other documents cited in this application are fully incorporated by reference to the extent such disclosure is not inconsistent with this application and for all jurisdictions in which such incorporation is permitted.

The foregoing description of the invention is illustrative and explanatory of the present invention. Various changes in the materials, apparatus, and process employed will occur to those skilled in the art. It is intended that all such variations within the scope and spirit of the appended claims be embraced thereby.

## Claims

1. A nonwoven composition having at least one elastic layer, wherein the elastic layer comprises: (i) from 70 to 99 wt% of a propylene-based polymer, the propylene-based polymer having:

   a. from 75 to 95 wt% propylene and from 5 to 25 wt% ethylene and/or a $C_4$-$C_{12}$ $\alpha$-olefin;
   b. a triad tacticity greater than 90%; and
   c. a heat of fusion less than 75 J/g,

   and (ii) from 1 to 30 wt% of one or more ethylene-based polymers, wherein the ethylene-based polymer comprises from 65 to 100 wt% ethylene and from 0 to 35 wt% of one or more $C_3$-$C_{12}$ $\alpha$-olefins.

2. The composition of claim 1, wherein the ethylene-based polymer has a melt index greater than 5 g/10 min (at 190°C, 2.16 kg).

3. The composition of any one of the preceding claims, wherein the ethylene-based polymer is a polyethylene wax.

4. The composition of any one of the preceding claims, wherein the ethylene-based polymer is a polyethylene wax having a $M_w$ of less than 65,000 g/mol.

5. The composition of any one of the preceding claims, wherein the elastic layer comprises from 3 to 25 wt% of the ethylene-based polymer.

6. The composition of any one of the preceding claims, wherein the propylene-based polymer has a melt flow rate (230°C, 2.16 kg) greater than 10 g/10 min.

7. The composition of any one of the preceding claims, wherein the elastic layer has a peak load of less than 3 lb (13.3 N), as determined by a $1^{st}$ cycle hysteresis loop at 1500 m/min.

8. The composition of any one of the preceding claims, wherein the composition has a peak CD elongation greater than 225%.

9. The composition of any one of the preceding claims, wherein the composition has a peak CD tensile strength greater than 22 N/5 cm.

10. The composition of any one of the preceding claims, wherein the composition has a $1^{st}$ cycle hysteresis less than 75%.

11. The composition of any one of the preceding claims, wherein the composition has a $1^{st}$ cycle permanent set less than 29%.

12. The composition of any one of the preceding claims, wherein the composition has:

   a. a peak tensile strength greater than or equal to the peak tensile strength of a composition wherein the elastic layer comprises the propylene-based elastomer alone; and
b. a permanent set equal to or less than the permanent set of a composition wherein the elastic layer comprises the propylene-based elastomer alone.

**13.** The composition of any one of the preceding claims, further comprising one or more facing layers.

**14.** The composition of any one of the preceding claims, wherein the one or more facing layers is formed by spunbonding, and the elastic layer is formed by meltblowing.

**15.** The composition of any one of the preceding claims, wherein the facing layer comprises polypropylene, polyethylene terephthalate, or a combination thereof.

**Patentansprüche**

**1.** Vlieszusammensetzung mit mindestens einer elastischen Schicht, wobei die elastische Schicht

(i) 70 bis 99 Gew.-% eines Propylen-basierten Polymers, wobei das Propylen-basierte Polymer

a. 75 bis 95 Gew.-% Propylen und 5 bis 25 Gew.-% Ethylen und/oder $C_4$-$C_{12}$ $\alpha$-Olefin,
b. eine Triadentaktizität von mehr als 90% und
c. eine Schmelzwärme von weniger als 75 J/g aufweist, und

(ii) 1 bis 30 Gew.-% eines oder mehrerer Ethylen-basierter Polymere umfasst, wobei das Ethylen-basierte Polymer 65 bis 100 Gew.-% Ethylen und 0 bis 35 Gew.-% eines oder mehrerer $C_3$-$C_{12}$ $\alpha$-Olefine enthält.

**2.** Zusammensetzung nach Anspruch 1, wobei das Ethylen-basierte Polymer einen Schmelzindex von mehr als 5 g/10 Min. (bei 190°C, 2,16 kg) aufweist.

**3.** Zusammensetzung nach einem der vorhergehenden Ansprüche, wobei das Ethylen-basierte Polymer ein Polyethylenwachs ist.

**4.** Zusammensetzung nach einem der vorhergehenden Ansprüche, wobei das Ethylen-basierte Polymer ein Polyethylenwachs mit einem $M_w$ von weniger als 65.000 g/Mol ist.

**5.** Zusammensetzung nach einem der vorhergehenden Ansprüche, wobei die elastische Schicht 3 bis 25 Gew.-% des Ethylenbasierten Polymers umfasst.

**6.** Zusammensetzung nach einem der vorhergehenden Ansprüche, wobei das Propylen-basierte Polymer eine Schmelzflussgeschwindigkeit (230°C, 2,16 kg) von mehr als 10 g/10 Min. aufweist.

**7.** Zusammensetzung nach einem der vorhergehenden Ansprüche, wobei die elastische Schicht eine Spitzenbelastung von weniger als 3 Pfund (13,3 N) aufweist, bestimmt durch eine Hystereseschleife im ersten Durchlauf bei 1.500 m/Min.

**8.** Zusammensetzung nach einem der vorhergehenden Ansprüche, wobei die Zusammensetzung eine Spitzenquerdehnung von mehr als 225% aufweist.

**9.** Zusammensetzung nach einem der vorhergehenden Ansprüche, wobei die Zusammensetzung eine Spitzenzugfestigkeit in Querrichtung von mehr als 22 N/5 cm aufweist.

**10.** Zusammensetzung nach einem der vorhergehenden Ansprüche, wobei die Zusammensetzung eine Hysterese im ersten Durchlauf von weniger als 75% aufweist.

**11.** Zusammensetzung nach einem der vorhergehenden Ansprüche, wobei die Zusammensetzung eine bleibende Verformung im ersten Durchlauf von weniger als 29% aufweist.

**12.** Zusammensetzung nach einem der vorhergehenden Ansprüche, wobei die Zusammensetzung

a. eine Spitzenzugfestigkeit, die gleich oder größer der Spitzenzugfestigkeit einer Zusammensetzung ist, bei der die elastische Schicht Propylen-basiertes Elastomer allein umfasst, und
b. eine bleibende Verformung aufweist, die gleich oder geringer ist als die bleibende Verformung einer Zusammensetzung, bei der die elastische Schicht Propylen-basiertes Elastomer allein umfasst.

**13.** Zusammensetzung nach einem der vorhergehenden Ansprüche, die ferner ein oder mehrere Deckschichten umfasst.

**14.** Zusammensetzung nach einem der vorhergehenden Ansprüche, wobei die eine oder mehreren Deckschichten durch Spun-Bonding gebildet ist und die elastische Schicht durch Schmelzblasen gebildet ist.

**15.** Zusammensetzung nach einem der vorhergehenden Ansprüche, wobei die Deckschicht Polypropylen, Polyethylenterephthalat oder eine Kombination davon umfasst.

## Revendications

**1.** Composition non tissée ayant au moins une couche élastique, la couche élastique comprenant : (i) de 70 à 99 % en poids d'un polymère à base de propylène, le polymère à base de propylène ayant :

a. de 75 à 95 % en poids de propylène et de 5 à 25 % en poids d'éthylène et/ou d'une $\alpha$-oléfine en $C_4$-$C_{12}$ ;
b. une tacticité de triade supérieure à 90 % ; et
c. une chaleur de fusion inférieure à 75 J/g,

et (ii) de 1 à 30 % en poids d'un ou plusieurs polymères à base d'éthylène, le polymère à base d'éthylène comprenant de 65 à 100 % en poids d'éthylène et de 0 à 35 % en poids d'une ou plusieurs $\alpha$-oléfines en $C_3$-$C_{12}$.

**2.** Composition de la revendication 1, dans laquelle le polymère à base d'éthylène a un indice de fluidité supérieur à 5 g/10 min (à 190 °C, 2,16 kg).

**3.** Composition de l'une quelconque des revendications précédentes, dans laquelle le polymère à base d'éthylène est une cire de polyéthylène.

**4.** Composition de l'une quelconque des revendications précédentes, dans laquelle le polymère à base d'éthylène est une cire de polyéthylène ayant un $M_w$ inférieur à 65 000 g/mol.

**5.** Composition de l'une quelconque des revendications précédentes, dans laquelle la couche élastique comprend de 3 à 25 % en poids du polymère à base d'éthylène.

**6.** Composition de l'une quelconque des revendications précédentes, dans laquelle le polymère à base de propylène a un indice de fluidité (230 °C, 2,16 kg) supérieur à 10 g/10 min.

**7.** Composition de l'une quelconque des revendications précédentes, dans laquelle la couche élastique a une charge maximale inférieure à 3 lb (13,3 N), telle que déterminée par une boucle d'hystérésis du premier cycle à 1500 m/min.

**8.** Composition de l'une quelconque des revendications précédentes, la composition ayant un allongement maximal dans le sens travers supérieur à 225 %.

**9.** Composition de l'une quelconque des revendications précédentes, la composition ayant une résistance à la traction maximale dans le sens travers supérieure à 22 N/5 cm.

**10.** Composition de l'une quelconque des revendications précédentes, la composition ayant une hystérésis au premier cycle inférieure à 75 %.

**11.** Composition de l'une quelconque des revendications précédentes, la composition ayant une déformation permanente au premier cycle inférieure à 29 %.

**12.** Composition de l'une quelconque des revendications précédentes, la composition ayant :

a. une résistance à la traction maximale supérieure ou égale à la résistance à la traction maximale d'une composition dans laquelle la couche élastique comprend l'élastomère à base de propylène seul ; et
b. une déformation permanente égale ou inférieure à la déformation permanente d'une composition dans laquelle la couche élastique comprend l'élastomère à base de propylène seul.

**13.** Composition de l'une quelconque des revendications précédentes, comprenant en outre une ou plusieurs couches de parement.

**14.** Composition de l'une quelconque des revendications précédentes, dans laquelle la ou les couches de parement sont formées par filage-liage, et la couche élastique est formée par fusion-soufflage.

**15.** Composition de l'une quelconque des revendications précédentes, dans laquelle la couche de parement comprend du polypropylène, du téréphtalate de polyéthylène, ou une combinaison de ceux-ci.

Fig. 1a

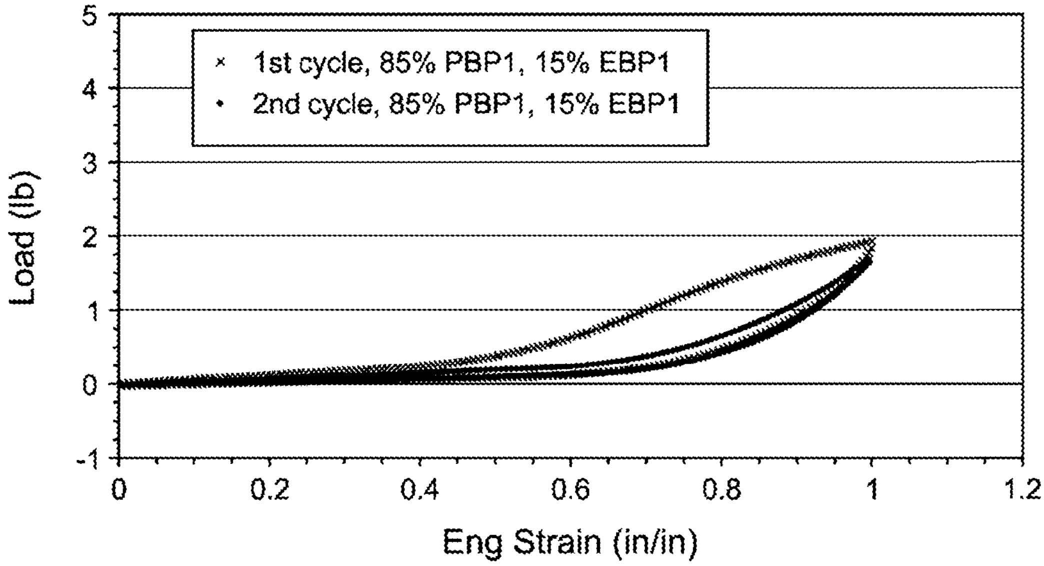
1st cycle, 85% PBP1, 15% EBP1
2nd cycle, 85% PBP1, 15% EBP1
Load (lb)
Eng Strain (in/in)
5
4
3
2
1
0
-1
0
0.2
0.4
0.6
0.8
1
1.2

Fig. 1b

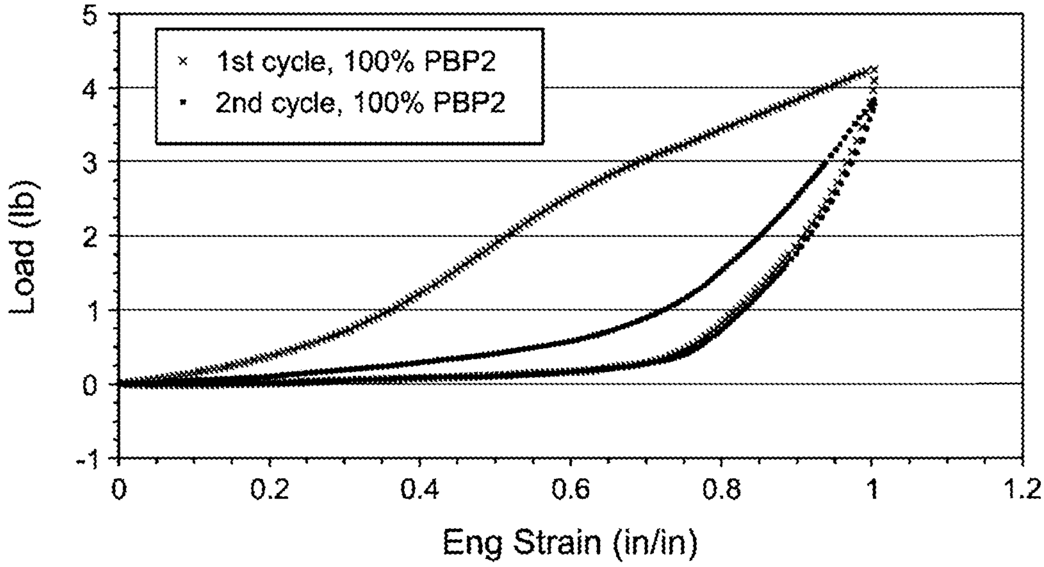
1st cycle, 100% PBP2
2nd cycle, 100% PBP2
Load (lb)
Eng Strain (in/in)
5
4
3
2
1
0
-1
0
0.2
0.4
0.6
0.8
1
1.2

Fig. 2a

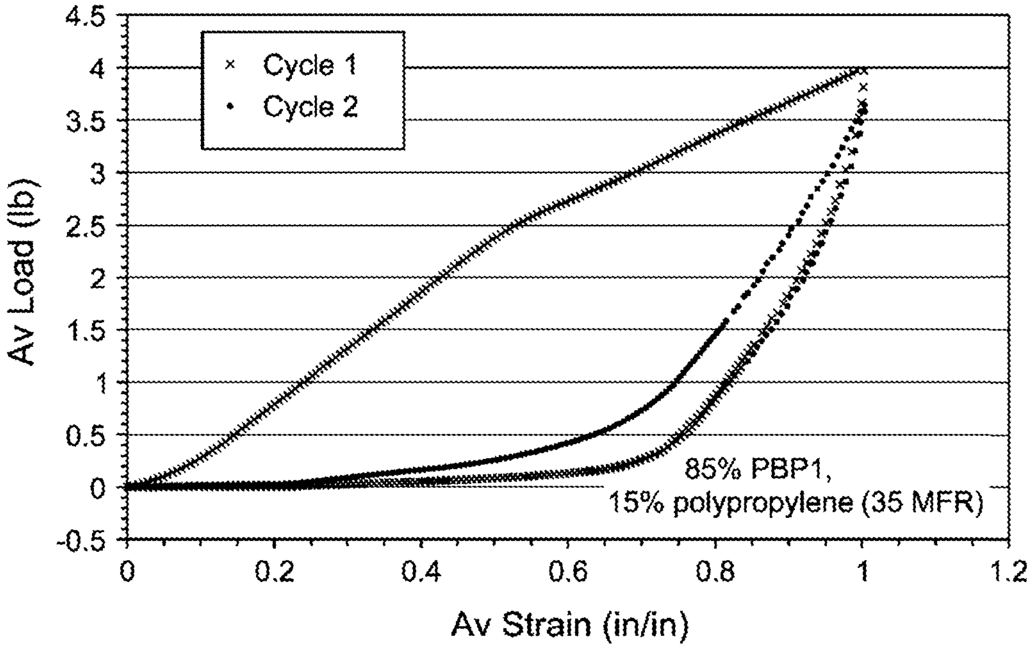
4.5
4
3.5
3
2.5
2
1.5
1
0.5
0
-0.5
Av Load (lb)
0
0.2
0.4
0.6
0.8
1
1.2
Av Strain (in/in)
Cycle 1
Cycle 2
85% PBP1,
15% polypropylene (35 MFR)

Fig. 2b

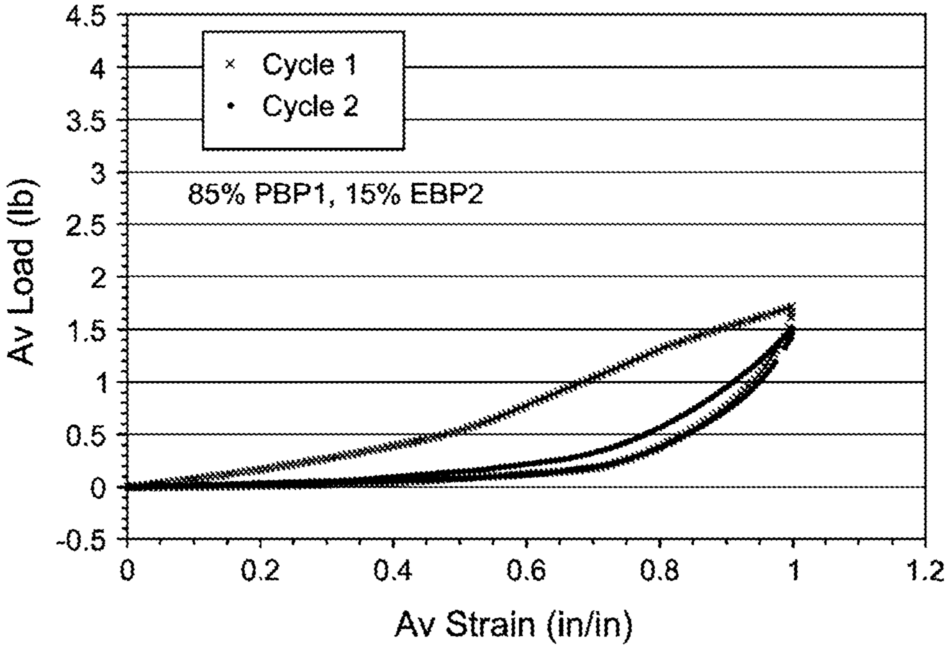
4.5
4
3.5
3
2.5
2
1.5
1
0.5
0
-0.5
Av Load (lb)
0
0.2
0.4
0.6
0.8
1
1.2
Av Strain (in/in)
Cycle 1
Cycle 2
85% PBP1, 15% EBP2

Fig. 2c

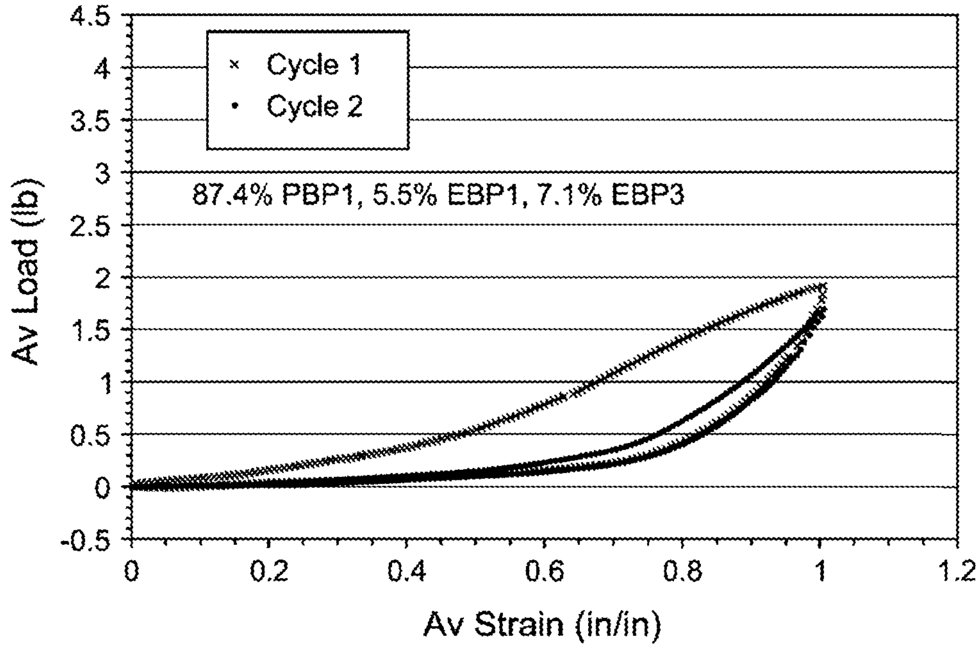
Cycle 1
Cycle 2
87.4% PBP1, 5.5% EBP1, 7.1% EBP3
Av Load (lb)
Av Strain (in/in)
4.5
4
3.5
3
2.5
2
1.5
1
0.5
0
-0.5
0
0.2
0.4
0.6
0.8
1
1.2

Fig. 3a

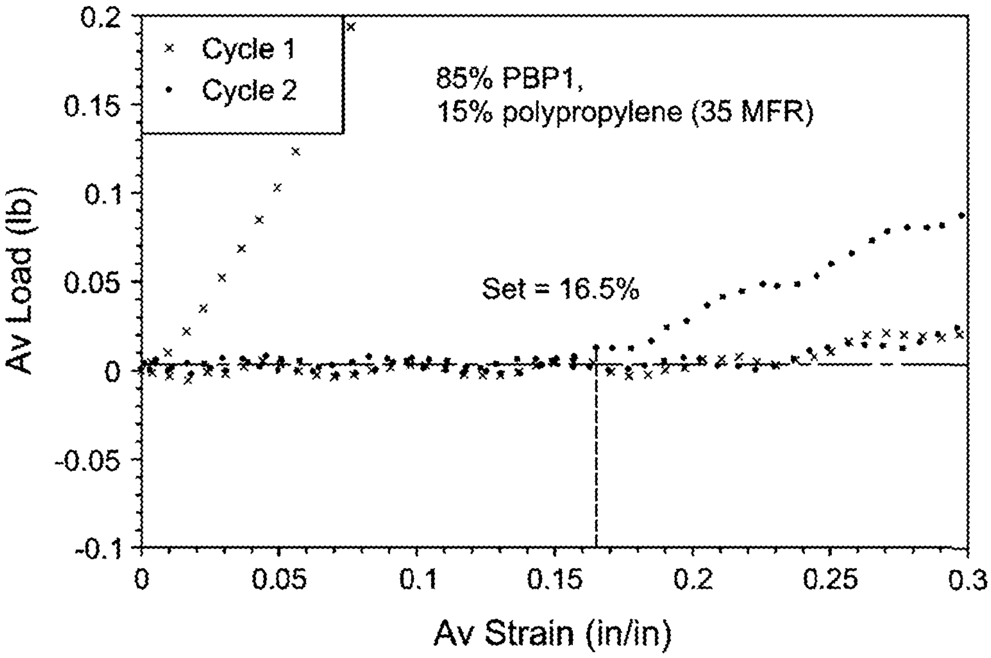
Cycle 1
Cycle 2
85% PBP1,
15% polypropylene (35 MFR)
Set = 16.5%
Av Load (lb)
Av Strain (in/in)
0.2
0.15
0.1
0.05
0
-0.05
-0.1
0
0.05
0.1
0.15
0.2
0.25
0.3

Fig. 3b

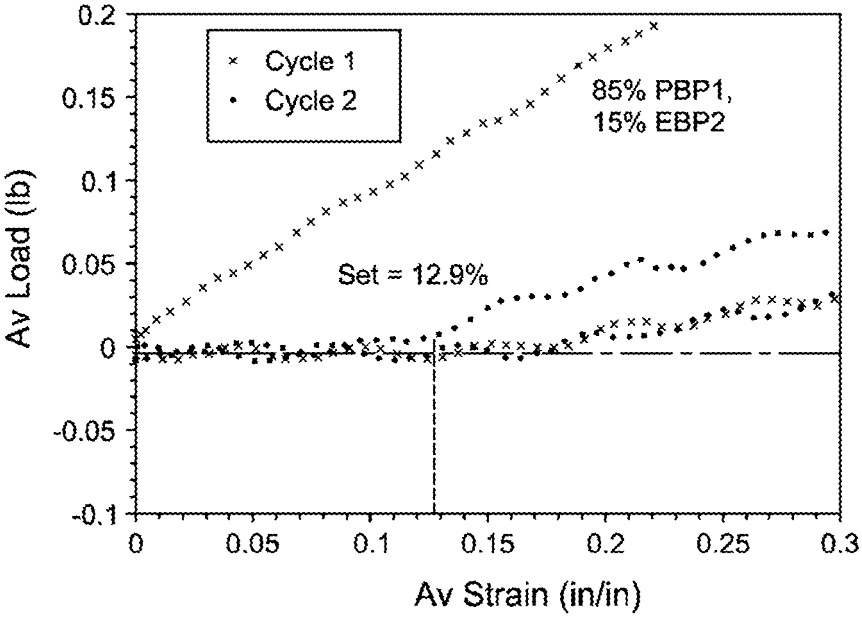
0.2
0.15
0.1
0.05
0
-0.05
-0.1
Av Load (lb)
Cycle 1
Cycle 2
85% PBP1,
15% EBP2
Set = 12.9%
0
0.05
0.1
0.15
0.2
0.25
0.3
Av Strain (in/in)

Fig. 3c

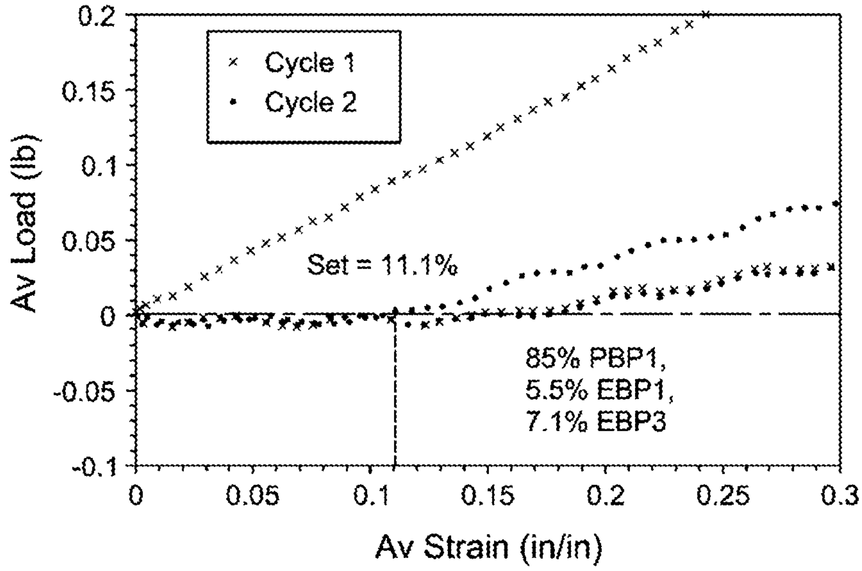
0.2
0.15
0.1
0.05
0
-0.05
-0.1
Av Load (lb)
Cycle 1
Cycle 2
Set = 11.1%
85% PBP1,
5.5% EBP1,
7.1% EBP3
0
0.05
0.1
0.15
0.2
0.25
0.3
Av Strain (in/in)

Fig. 4a

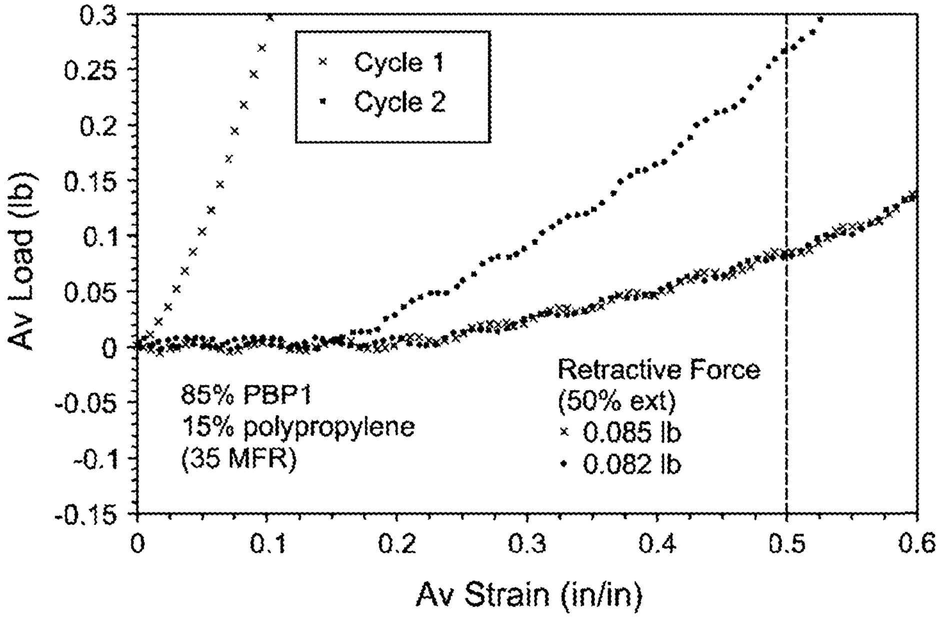
Cycle 1
Cycle 2
Av Load (lb)
Av Strain (in/in)
85% PBP1
15% polypropylene
(35 MFR)
Retractive Force
(50% ext)
× 0.085 lb
• 0.082 lb
0.3
0.25
0.2
0.15
0.1
0.05
0
-0.05
-0.1
-0.15
0
0.1
0.2
0.3
0.4
0.5
0.6

Fig. 4b

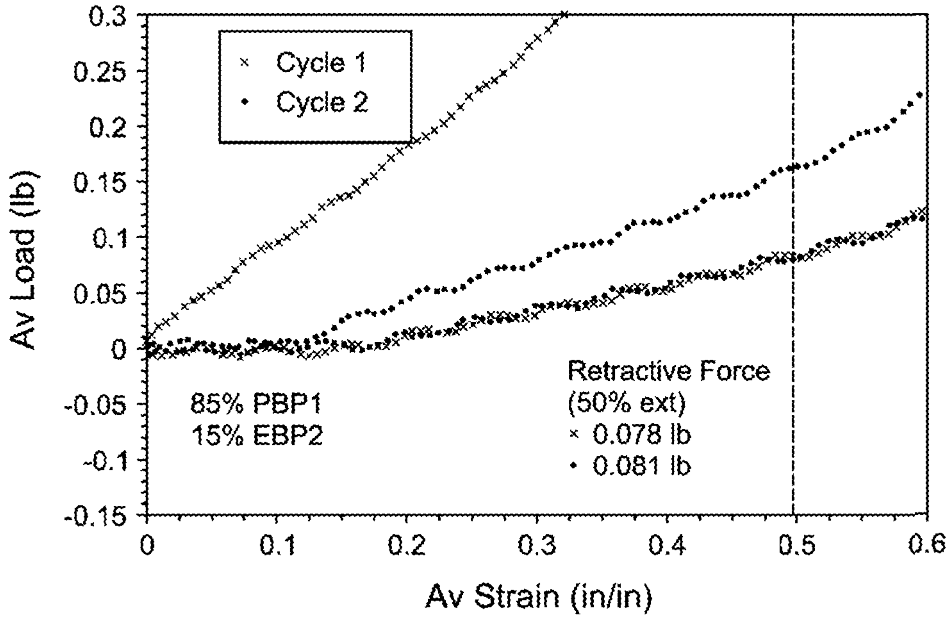
Cycle 1
Cycle 2
Av Load (lb)
Av Strain (in/in)
85% PBP1
15% EBP2
Retractive Force
(50% ext)
× 0.078 lb
• 0.081 lb
0.3
0.25
0.2
0.15
0.1
0.05
0
-0.05
-0.1
-0.15
0
0.1
0.2
0.3
0.4
0.5
0.6

Fig. 4c

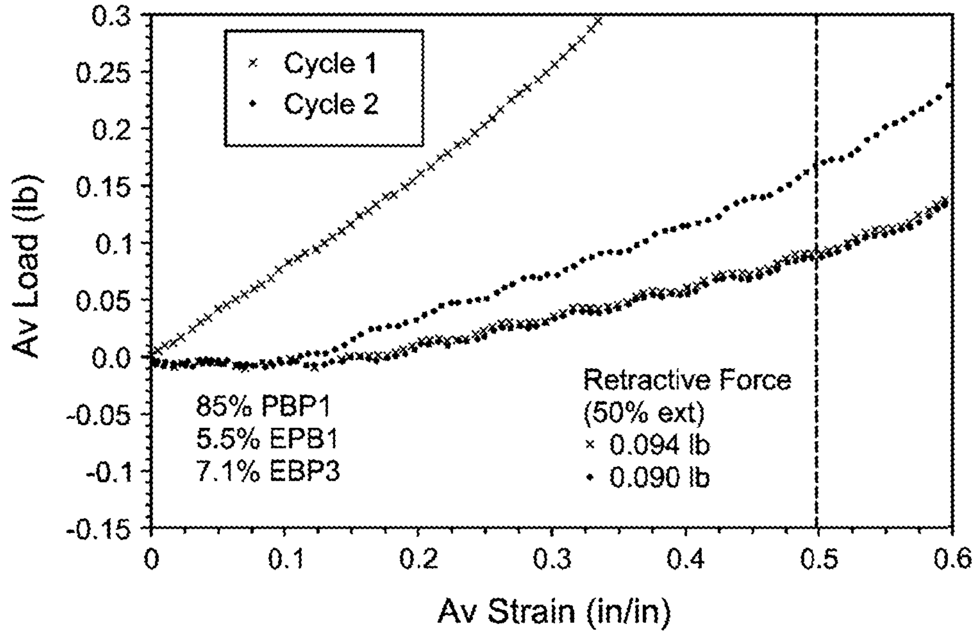
0.3
0.25
0.2
0.15
0.1
0.05
0.0
-0.05
-0.1
-0.15
Av Load (lb)
Cycle 1
Cycle 2
85% PBP1
5.5% EPB1
7.1% EBP3
Retractive Force
(50% ext)
0.094 lb
0.090 lb
0
0.1
0.2
0.3
0.4
0.5
0.6
Av Strain (in/in)

Fig. 5a

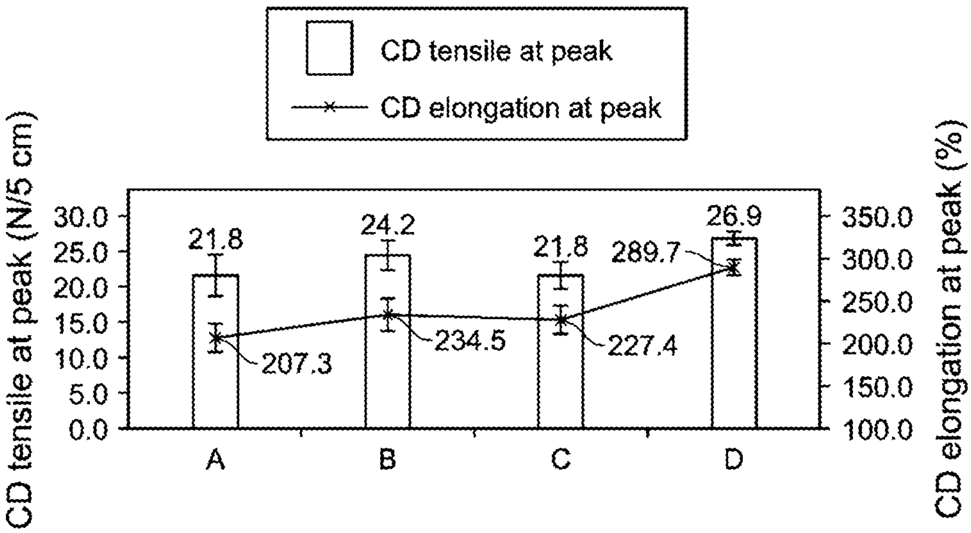
CD tensile at peak
CD elongation at peak
CD tensile at peak (N/5 cm)
30.0
25.0
20.0
15.0
10.0
5.0
0.0
21.8
24.2
21.8
26.9
289.7
207.3
234.5
227.4
A
B
C
D
350.0
300.0
250.0
200.0
150.0
100.0
CD elongation at peak (%)

Fig. 5b

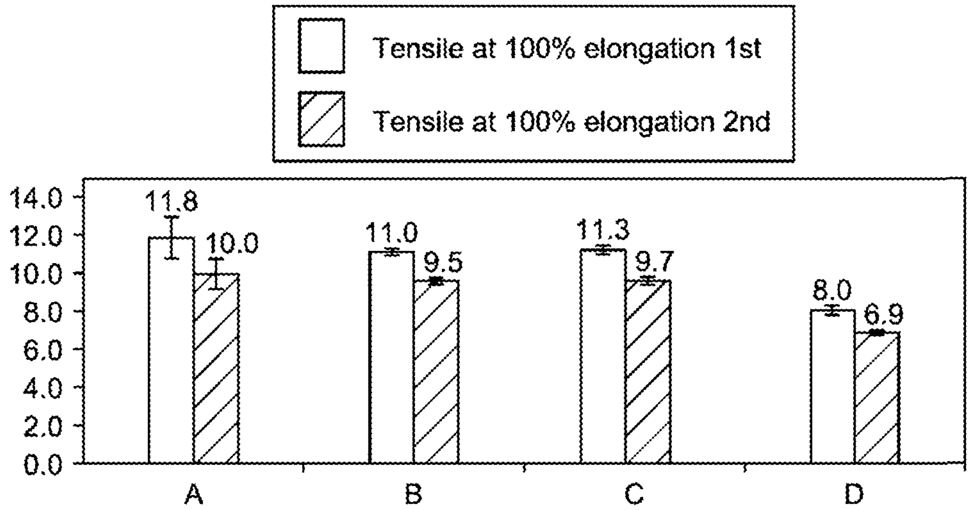
Tensile at 100% elongation 1st
Tensile at 100% elongation 2nd
14.0
12.0
10.0
8.0
6.0
4.0
2.0
0.0
11.8
10.0
11.0
9.5
11.3
9.7
8.0
6.9
A
B
C
D

Fig. 6

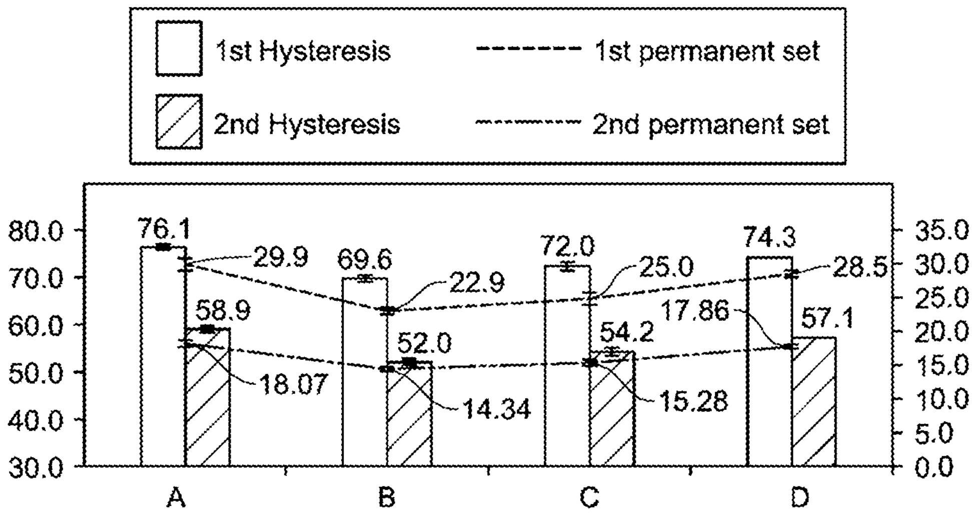
1st Hysteresis
1st permanent set
2nd Hysteresis
2nd permanent set
80.0
70.0
60.0
50.0
40.0
30.0
35.0
30.0
25.0
20.0
15.0
10.0
5.0
0.0
76.1
29.9
58.9
18.07
69.6
22.9
52.0
14.34
72.0
25.0
54.2
15.28
74.3
28.5
17.86
57.1
A
B
C
D

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 7232871 B
- US 4540753 A, Cozewith, Ju and Verstrate
- US 6881800 B
- US 6525157 B
- US 7601666 B
- US 3849241 A
- US 6268302 B
- US 4340563 A
- US 3692618 A
- US 3802817 A
- US 3338992 A
- US 3341394 A
- US 3502763 A
- US 3542615 A


### Non-patent literature cited in the description


- **H. N. CHENG.** *MACROMOLECULES,* 1984, vol. 17, 1950
- **VERSTRATE.** *Macromolecules,* 1988, vol. 21, 3360
- **WHEELER ; WILLIS.** *Applied Spectroscopy,* 1993, vol. 47, 1128-1130